# EUROPEAN PATENT APPLICATION

(11) **EP 4 738 404 A1**
(43) Date of publication of application: **06.05.2026**
(21) Application number: 24948083.1
(22) Date of filing: 07.08.2024
(51) Int. Cl.: H01G 4/228, H01G 4/30, H01G 4/38

(54) **MULTILAYER CERAMIC ELECTRONIC COMPONENT**

(71) Applicant: MURATA MANUFACTURING CO., LTD., Nagaokakyo-shi, Kyoto 617-8555 (JP)
(72) Inventor: HASEGAWA, Naotaka, Nagaokakyo-shi, Kyoto 617-8555 (JP); IKEDA, Moeko, Nagaokakyo-shi, Kyoto 617-8555 (JP); FUJIWARA, Keita, Nagaokakyo-shi, Kyoto 617-8555 (JP); YORIMOTO, Junpei, Nagaokakyo-shi, Kyoto 617-8555 (JP)
(74) Representative: Stöckeler, Ferdinand
(86) International application number: PCT/JP2024/028220
(87) International publication number: WO 2026/033671

(57) **Abstract**

An object of the present invention is to provide multilayer ceramic electronic components each including a plurality of multilayer ceramic electronic component bodies and metal terminals and each being excellent in degrees of freedom of design of lands. In a multilayer ceramic capacitor 1, a first metal terminal 50A includes a first bonding portion 51A that is opposed to each of first end surfaces CA and is connected to each of the first external electrodes 30A and extends more in the direction toward a third direction outer side Z2 than the multilayer ceramic capacitor body 10, a first mounting portion 61A that extends in the direction toward the second direction middle side Y1 from an end portion of the first bonding portion 51A in the direction toward the third direction outer side Z2 and is connected to a land, and a first rising portion 63A that extends in the direction toward the third direction middle side Z1 from an end portion of the first mounting portion 61A in the direction toward the second direction middle side Y1, and a first holding portion 65A that extends in the direction toward the second direction outer side Y2 from an end portion of the first rising portion 63A in the direction toward the third direction middle side Z1 and is opposed to each of the multilayer ceramic capacitor main bodies 10 in the third direction Z. The first metal terminal 50A is provided so as to straddle the first external electrode 30A of each of the multilayer ceramic capacitor bodies 10.

## Description

### TECHNICAL FIELD

The present invention relates to a multilayer ceramic electronic component.

### BACKGROUND ART

In the prior art, there are ceramic electronic components that each include a pair of chips and a pair of metal terminal portions provided corresponding to the end surfaces of the pair of chips (for example, Patent Document 1).

According to the ceramic electronic component of Patent Document 1, it is possible to prevent the vibration generated in the chip component from being transmitted to the mounting substrate via the metal terminal, protect the chip component from deformation stress, impact, and the like received from the substrate after mounting, and prevent an increase in the mounting area.

### Citation List

### Patent Document

Patent Document 1: Japanese Unexamined Patent Application, Publication No. 2021-093542

### DISCLOSURE OF THE INVENTION

### Problems to be Solved by the Invention

In the ceramic electronic component of Patent Document 1, the solder connecting the ceramic electronic component to the mounting substrate spreads on the surface of the metal terminal opposite to the chip component. In order to cause the solder to spread on the surface of the metal terminal opposite to the chip component, in principle, the land needs to extend to the side opposite to the chip component across the metal terminal.

It is believed to be advantageous if the configuration of the lands can be changed in accordance with the arrangement of components and the like around the lands. However, the ceramic electronic component of Patent Document 1 has room for improvement in terms of the degrees of freedom in design of lands.

An object of the present invention is to provide multilayer ceramic electronic components each including a plurality of multilayer ceramic electronic component bodies and metal terminals and each being excellent in freedom of design of lands.

### Means for Solving the Problems

In order to solve the abovementioned issue, an embodiment of the present invention provides a multilayer ceramic electronic component to be connected to a land provided on a mounting substrate. The multilayer ceramic electronic component includes: a plurality of multilayer ceramic electronic component bodies each including a multilayer body including an inner layer portion including a plurality of ceramic layers and a plurality of internal electrodes alternately laminated, a pair of outer layer portions that sandwich the inner layer portion in a lamination direction, a first main surface and a second main surface opposed to each other in the lamination direction, a first lateral surface and a second lateral surface opposed to each other in a width direction orthogonal to the lamination direction, and a first end surface and a second end surface opposed to each other in a length direction orthogonal to the lamination direction and the width direction, a first external electrode on the first end surface, and a second external electrode on the second end surface; a first metal terminal connected to the first external electrode; and a second metal terminal connected to the second external electrode. Each of the multilayer ceramic electronic component bodies is oriented so that the length direction of each of the multilayer ceramic electronic component bodies is parallel to each other, and each of the multilayer ceramic electronic component bodies is arranged in a direction orthogonal to the length direction of the multilayer ceramic electronic component bodies. When a direction in which the multilayer ceramic electronic component bodies are arranged is defined as a first direction, a direction parallel to the length direction of each of the multilayer ceramic electronic component bodies among directions orthogonal to the first direction is defined as a second direction, a direction orthogonal to the first direction and the second direction is defined as a third direction, a direction approaching a middle portion of the multilayer body in the second direction is defined as a direction toward a second direction middle side, a direction away from the middle portion of the multilayer body in the second direction is defined as a direction toward a second direction outer side, a direction approaching a middle portion of the multilayer body in the third direction is defined as a direction toward a third direction middle side, and a direction away from the middle portion of the multilayer body in the third direction is defined as a direction toward a third direction outer side, the first metal terminal includes a first bonding portion that is opposed to each of the first end surfaces, is connected to each of the first external electrodes, and extends more in a direction toward the third direction outer side than each of the multilayer ceramic electronic component bodies, a first mounting portion that extends in a direction toward the second direction middle side from an end portion of the first bonding portion in a direction toward the third direction outer side and is connected to the land, a first rising portion that extends in a direction toward the third direction middle side from an end portion of the first mounting portion in a direction toward the second direction middle side, and a first holding portion that extends in a direction toward the second direction outer side from an end portion of the first rising portion in a direction toward the third direction middle side and is opposed to each of the multilayer ceramic electronic component bodies in the third direction, in which the first metal terminal is provided so as to straddle the first external electrode of each of the multilayer ceramic electronic component bodies, and the second metal terminal includes a second bonding portion that is opposed to each of the second end surfaces, is connected to each of the second external electrodes, and extends more in a direction toward the third direction outer side than each of the multilayer ceramic electronic component bodies, a second mounting portion that extends in a direction toward the second direction middle side from an end portion of the second bonding portion in a direction toward the third direction outer side and is connected to the land, a second rising portion that extends in a direction toward the third direction middle side from an end portion of the second mounting portion in a direction toward the second direction middle side, and a second holding portion that extends in a direction toward the second direction outer side from an end portion of the second rising portion in a direction toward the third direction middle side and is opposed to each of the multilayer ceramic electronic component bodies in the third direction, in which the second metal terminal is provided so as to straddle the second external electrode of each of the multilayer ceramic electronic component bodies.

### Effects of the Invention

According to an embodiment of the present invention, it is possible to provide multilayer ceramic electronic components each including a plurality of multilayer ceramic electronic component bodies and metal terminals and each being excellent in freedom of design of lands.

### BRIEF DESCRIPTION OF THE DRAWINGS

FIG. 1 is a schematic perspective view of a multilayer ceramic capacitor according to a first embodiment.
FIG. 2 is a schematic perspective view of the multilayer ceramic capacitor body according to the first embodiment.
FIG. 3 is a cross-sectional view taken along the line III-III in FIG. 2.
FIG. 4 is a cross-sectional view taken along the line IV-IV in FIG. 2.
FIG. 5 is a schematic perspective view of a pair of metal terminals according to the first embodiment.
FIG. 6A is a plan view of the multilayer ceramic capacitor according to the first embodiment viewed from the first main surface side in the first direction.
FIG. 6B is a view corresponding to FIG. 6A and showing a variation of a mode of bonding the multilayer ceramic capacitor body and the metal terminal.
FIG. 6C is a view corresponding to FIG. 6A and showing a variation of a mode of bonding the multilayer ceramic capacitor body and the metal terminal.
FIG. 7 is a plan view of the multilayer ceramic capacitor according to the first embodiment viewed from the first end surface side in the second direction.
FIG. 8 is a plan view of the multilayer ceramic capacitor according to the first embodiment viewed from the first lateral surface side in the third direction.
FIG. 9 is a plan view of the mounting configuration of the multilayer ceramic capacitor viewed from the first main surface side in the first direction, showing variations in design of lands.
FIG. 10 is a plan view of the mounting configuration of the multilayer ceramic capacitor viewed from the first main surface side in the first direction, showing variations in the design of lands.
FIG. 11 is a plan view of the mounting configuration of the multilayer ceramic capacitor viewed from the first main surface side in the first direction, showing variations in the design of lands.
FIG. 12 is a schematic perspective view of a multilayer ceramic capacitor according to a second embodiment.
FIG. 13 is a schematic perspective view of a pair of metal terminals according to the second embodiment.
FIG. 14 is a plan view of the multilayer ceramic capacitor according to the second embodiment viewed from the first end surface side in the second direction.
FIG. 15 is a schematic perspective view of a multilayer ceramic capacitor according to a third embodiment.
FIG. 16 is a schematic perspective view of a multilayer ceramic capacitor according to a fourth embodiment.
FIG. 17 is a schematic perspective view of a pair of metal terminals according to the fourth embodiment.
FIG. 18 is a plan view of the multilayer ceramic capacitor according to the fourth embodiment viewed from the first end surface side in the second direction.
FIG. 19 is a schematic perspective view of a multilayer ceramic capacitor body according to a modified example.
FIG. 20 is a cross-sectional view taken along the line XX-XX in FIG. 19.
FIG. 21 is a cross-sectional view taken along the line XXI-XXI in FIG. 19.
FIG. 22 is a view corresponding to FIG. 6A and showing a metal terminal according to the modified example.

### PREFERRED MODE FOR CARRYING OUT THE INVENTION

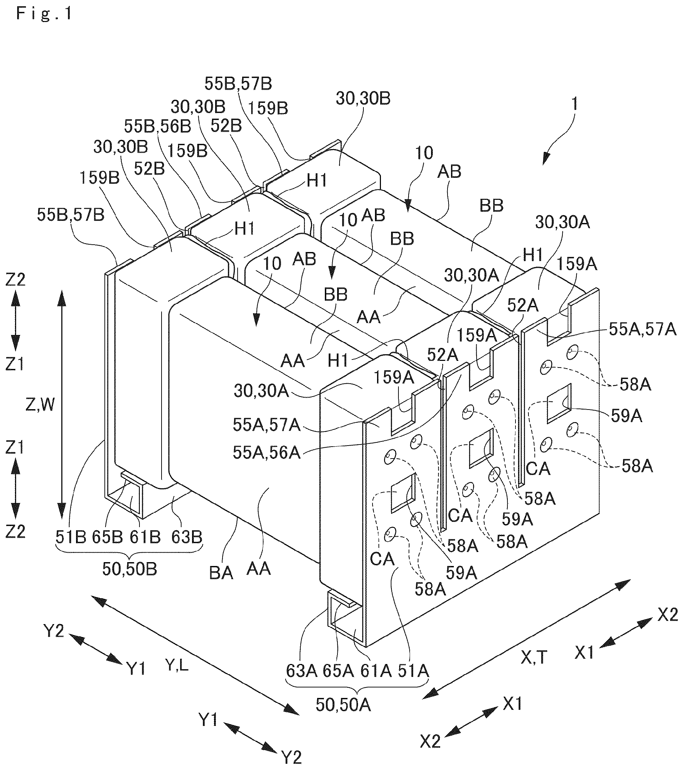

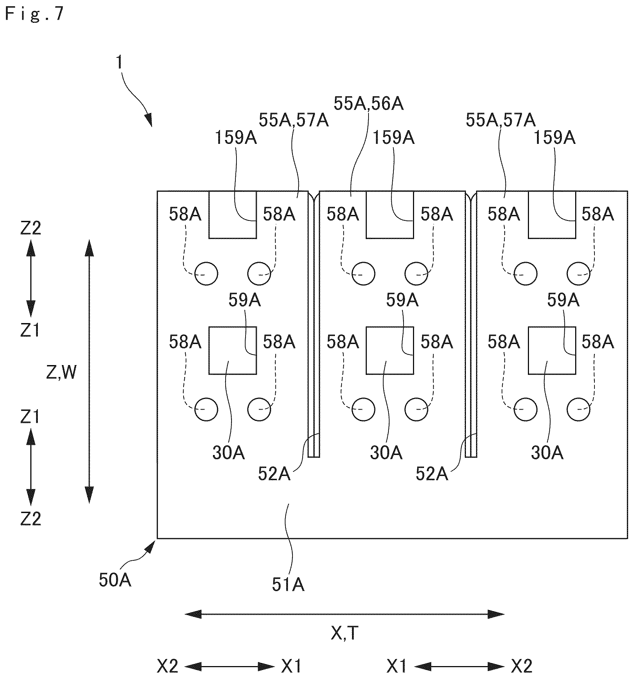

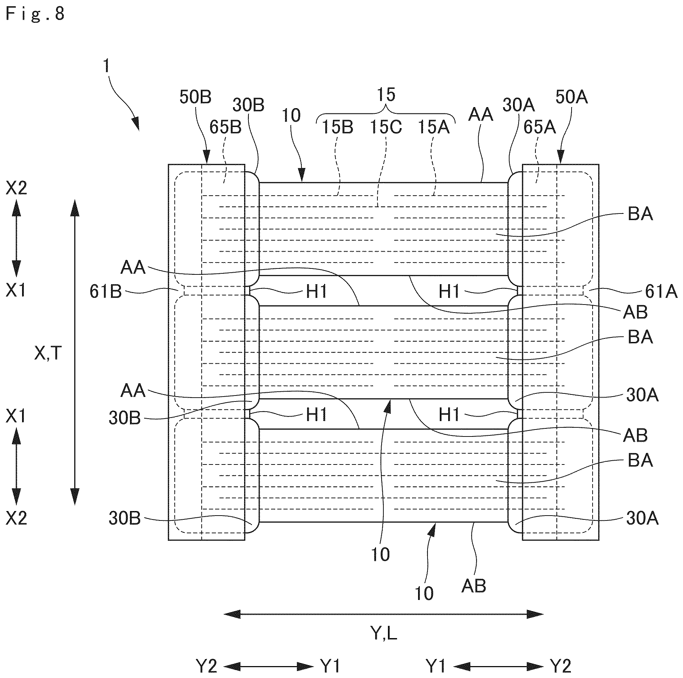

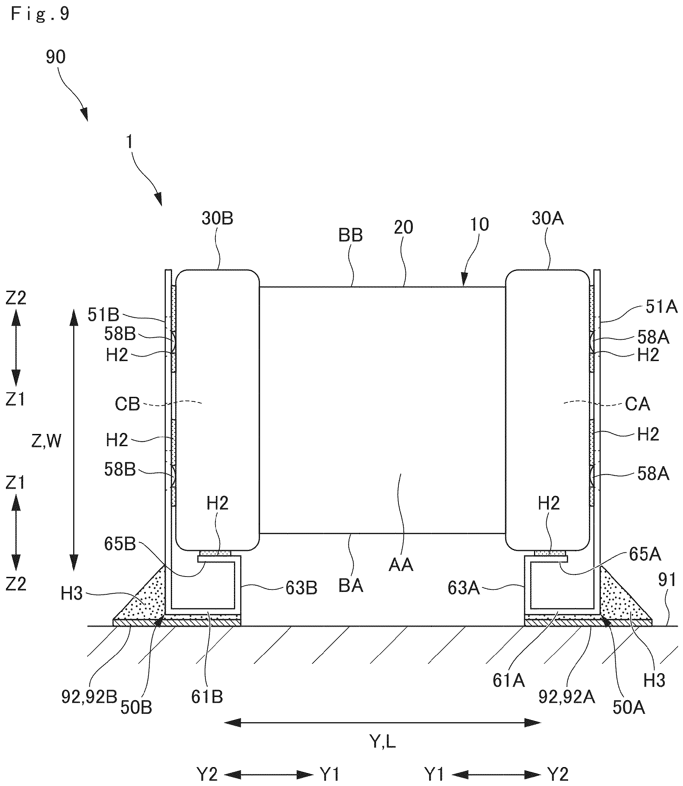

Hereinafter, a multilayer ceramic capacitor 1 as a multilayer ceramic electronic component according to an embodiment of the present invention will be described with reference to FIGS. 1 to 8. The multilayer ceramic capacitor 1 is used by being connected to a pair of lands 92 provided on a mounting substrate 91 (see FIGS. 9 to 11). The mounting configuration 90 (may be simply referred to as "mounting configuration 90") of the multilayer ceramic capacitor 1 will be described in detail later.

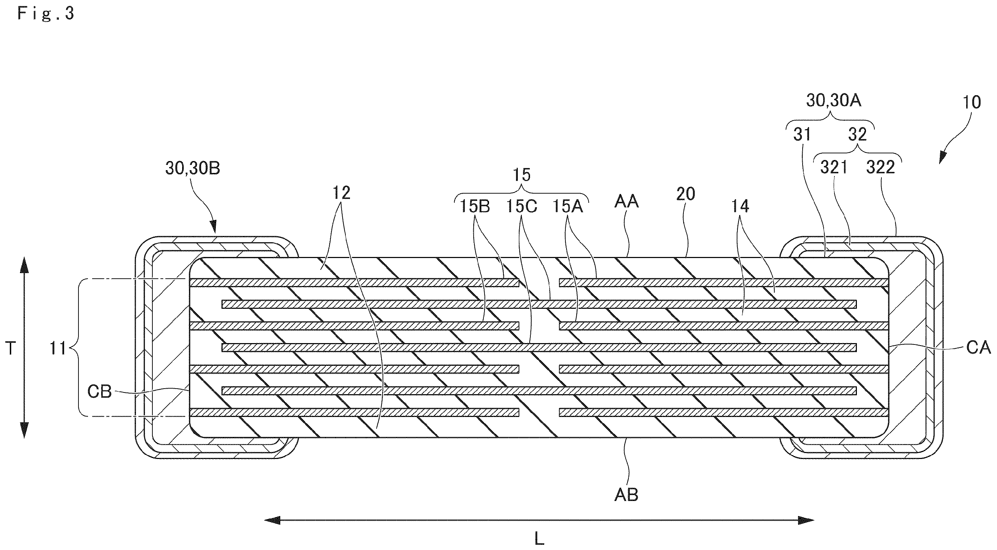

In addition, the drawings may be schematically simplified and drawn in order to explain the contents of the invention, and the drawn constituent elements or the ratio of the dimensions between the constituent elements may not coincide with the ratios of the dimensions described in the specification. In addition, components described in the specification may be omitted in the drawings, or the number of components may be omitted. For example, although the number of internal electrodes shown in FIG. 3 is seven for convenience of description, this does not indicate the actual number of internal electrodes 15. It should be noted that terms used in the present invention, such as "parallel", "orthogonal", "same", and the like, and values of lengths and angles, and the like, which specify shapes, geometrical conditions, and degrees thereof, are not limited to strict meanings, and should be interpreted to include a range in which similar functions can be expected.

As shown in FIG. 1, the multilayer ceramic capacitor 1 includes a plurality of multilayer ceramic capacitor bodies 10, a first metal terminal 50A, and a second metal terminal 50B. The multilayer ceramic capacitor corresponds to a multilayer ceramic electronic component. The multilayer ceramic capacitor body 10 corresponds to a multilayer ceramic electronic component body. The first metal terminal 50A and the second metal terminal 50B may be collectively referred to as a "metal terminal 50".

### (Multilayer Ceramic Capacitor Body)

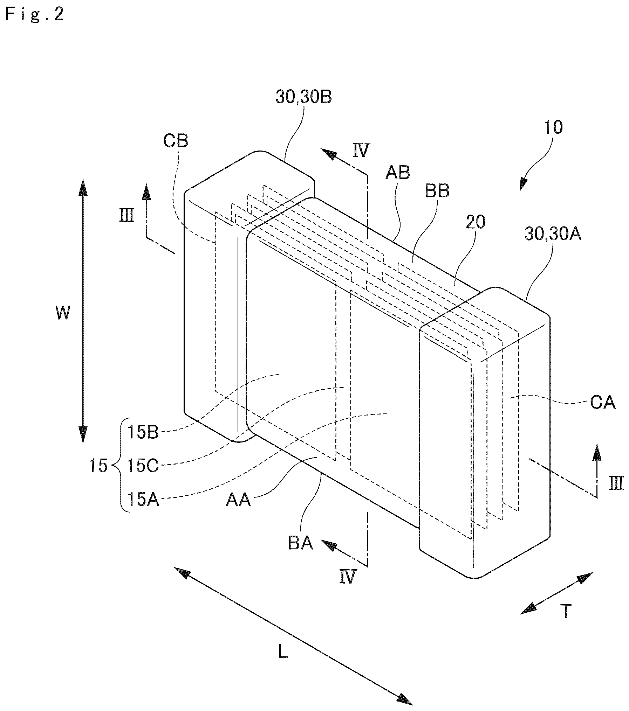

As shown in FIG. 2, the multilayer ceramic capacitor body 10 is a multilayer ceramic capacitor having a so-called multiple configuration, specifically, a multilayer ceramic capacitor having a two-portion configuration. The multilayer ceramic capacitor body 10 includes a multilayer body 20, a first external electrode 30A, and a second external electrode 30B. The multilayer body 20 has a substantially rectangular parallelepiped shape and has six outer surfaces. The multilayer body 20 includes an inner layer portion 11 in which the dielectric layers 14 and the internal electrodes 15 are laminated. The first external electrode 30A and the second external electrode 30B may be collectively referred to as an "external electrode 30".

In the present specification, a direction in which the dielectric layers 14 and the internal electrodes 15 are laminated in the multilayer ceramic capacitor 1 is referred to as a lamination direction T. One of the directions orthogonal to the lamination direction T is defined as a length direction L. A direction orthogonal to the length direction L and the lamination direction T is defined as a width direction W.

The multilayer ceramic capacitor bodies 10 are each arranged in a direction orthogonal to the length direction L of the multilayer ceramic capacitor bodies 10, and each oriented in a direction parallel to the length direction L. The direction in which the multilayer ceramic capacitor bodies 10 are arranged is referred to as a "first direction X". Among the directions orthogonal to the first direction X, a direction parallel to the length direction L of each multilayer ceramic capacitor body 10 is referred to as a "second direction Y". A direction orthogonal to the first direction X and the second direction Y is referred to as a "third direction Z".

In the present embodiment, the multilayer ceramic capacitor 1 is mounted on the mounting substrate 91 in a direction in which the first lateral surface BA of each multilayer ceramic capacitor body 10 is opposed to the mounting surface. Therefore, the first direction X coincides with the lamination direction T. The second direction Y coincides with the length direction L. The third direction Z coincides with the width direction W.

A direction in the first direction X approaching a middle portion in the first direction X of the multilayer ceramic capacitor 1 is referred to as a direction toward a "first direction middle side X1". A direction in the first direction X away from the middle portion in the first direction X of the multilayer ceramic capacitor 1 is referred to as a direction toward a "first direction outer side X2". A direction in the second direction Y approaching a middle portion in the second direction Y of the multilayer ceramic capacitor 1 is referred to as a direction toward a "second direction middle side Y1". A direction in the second direction Y away from a middle portion in the second direction Y of the multilayer ceramic capacitor 1 is referred to as a direction toward a "second direction outer side Y2". A direction in the third direction Z approaching a middle portion in the third direction Z of the multilayer ceramic capacitor 1 is referred to as a "third direction middle side Z1". A direction in the third direction Z away from a middle portion in the third direction Z of the multilayer ceramic capacitor 1 is referred to as a "third direction outer side Z2".

Among the six outer surfaces of the multilayer body 20, a pair of outer surfaces provided on both sides in the lamination direction T is defined as a first main surface AA and a second main surface AB, a pair of outer surfaces provided on both sides in the width direction W is defined as a first lateral surface BA and a second lateral surface BB, and a pair of outer surfaces provided on both sides in the length direction L is defined as a first end surface CA and a second end surface CB. The first main surface AA and the second main surface AB may be collectively referred to as "main surfaces A". The first lateral surface BA and the second lateral surface BB may be collectively referred to as "lateral surfaces B". The first end surface CA and the second end surface CB may be collectively referred to as "each end surface C".

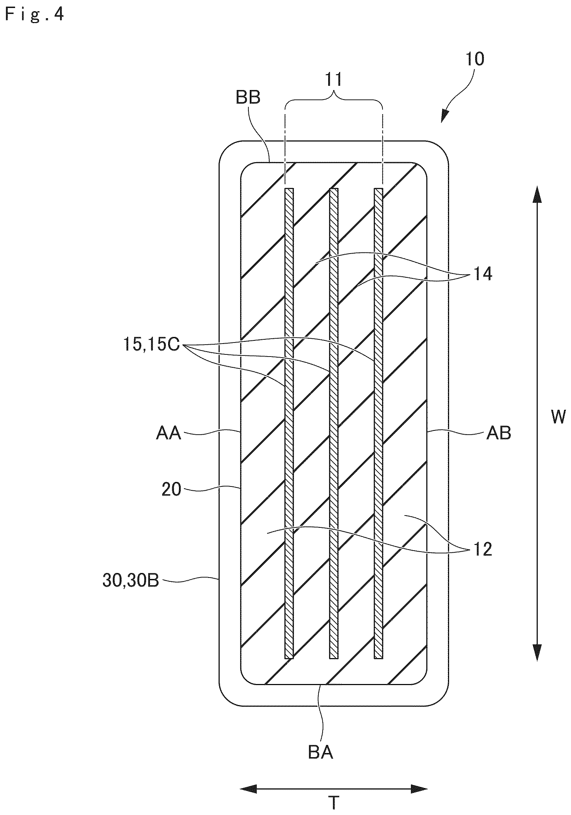

A cross section parallel to the lamination direction T and the length direction L is referred to as an "LT cross section". A cross section parallel to the lamination direction T and the width direction W is referred to as a "WT cross section". The cross section of FIG. 3 is an LT cross section passing through the middle portion in the width direction W of the multilayer ceramic capacitor body 10. The cross section of FIG. 4 is a WT cross section passing through the middle portion in the length direction L of the multilayer ceramic capacitor body 10.

### (Multilayer Body)

The multilayer body 20 includes an inner layer portion 11 and a pair of outer layer portions 12 that sandwich the inner layer portion 11 in the lamination direction T. A portion of the multilayer body 20 where the three outer surfaces intersect with each other is referred to as a "corner portion". A portion of the multilayer body 20 where two outer surfaces intersect with each other is referred to as a "ridge portion".

The outer dimensions of the multilayer body 20 are, for example, 0.5 mm or more and 3 mm or less in the lamination direction T, 2 mm or more and 6 mm or less in the length direction L, and 1 mm or more and 5 mm or less in the width direction W. The outer dimensions of the multilayer ceramic capacitor body 10 can be measured by a micrometer. The dimension in the lamination direction T is preferably smaller than the dimension in the width direction W. The dimension in the lamination direction T is preferably smaller than the dimension in the length direction L. However, the present invention is not limited to this.

### (Inner Layer Portion)

As shown in FIGS. 2 and 3, the inner layer portion 11 includes a plurality of dielectric layers 14 functioning as a plurality of ceramic layers and a plurality of internal electrodes 15. The dielectric layers 14 and the internal electrodes 15 are alternately laminated.

The dielectric layers 14 are each made of, for example, a dielectric ceramic containing BaTiO₃ as a main component. The dielectric ceramic may contain a Mn compound, a Fe compound, a Cr compound, a Co compound, a Ni compound, or the like as a subcomponent.

The internal electrodes 15 are each made of a metal material such as Ni, Cu, Ag, Pd, an Ag-Pd alloy, or Au. The plurality of internal electrodes 15 include first internal electrodes 15A each extending toward the first end surface CA, second internal electrodes 15B each extending toward the second end surface CB, and intermediate electrodes 15C each extending toward neither the first end surface CA nor the second end surface CB.

Each of the first internal electrodes 15A, each of the second internal electrodes 15B, and each of the intermediate electrodes 15C are alternately laminated in the lamination direction T while sandwiching a corresponding one of the dielectric layers 14. Each of the first internal electrodes 15A is exposed only to the first end surface CA. Each of the second internal electrodes 15B is exposed only to the second end surface CB. The first internal electrodes 15A and the second internal electrodes 15B are provided at intervals in the length direction L. Each of the intermediate electrodes 15C is separated from the end surface C and the lateral surface B. One end side of each of the intermediate electrodes 15C in the length direction L is opposed to the first internal electrode 15A in the lamination direction T. The other end side of each of the intermediate electrodes 15C in the length direction L is opposed to the second internal electrode 15B in the lamination direction T.

### (Outer Layer Portion)

The outer layer portion 12 is made of the same material as the dielectric layer 14 of the inner layer portion 11. The internal electrode 15 is not provided in the outer layer portions 12.

### (External Electrode)

The first external electrode 30A is provided on the first end surface CA. The first external electrode 30A covers not only the first end surface CA, but also a portion of the main surface A and a portion of the lateral surface B. The first external electrode 30A is connected to the first internal electrodes 15A.

The second external electrode 30B is provided on the second end surface CB. The second external electrode 30B covers not only the second end surface CB but also a portion of the main surface A and a portion of the lateral surface B. The second external electrode 30B is connected to the second internal electrodes 15B.

The external electrodes 30 each include a base electrode layer 31 provided on the surface of the multilayer body 20 and a plated layer 32 provided on the base electrode layer 31.

The base electrode layer 31 is, for example, a fired layer including an electrically conductive metal and glass. The electrically conductive metal is, for example, a metal such as Ni (nickel), Cu (copper), Ag (silver), Pd (palladium), Au (gold), or an Ag-Pd alloy, and is preferably Cu.

The plated layer 32 is made of, for example, one metal selected from the group consisting of Ni, Cu, Ag, Pd, Au, and Sn, or an alloy containing the metal. The plated layer 32 includes, for example, a first plated layer 321 provided on the base electrode layer 31 and a second plated layer 322 provided on the first plated layer 321.

The first plated layer 321 is, for example, a Ni plated layer. The second plated layer 322 is, for example, a Sn (tin) plated layer. The plated layer 32 may have a single-layer configuration.

Each external electrode 30 may have an electrode protrusion (not shown) protruding in the length direction L. The electrode protrusion is provided in, for example, a mountain shape in which a middle portion in the lamination direction T and the width direction W of each external electrode 30 is an apex.

In addition, the plurality of multilayer ceramic capacitor bodies 10 are each arranged in a direction orthogonal to the length direction L of each multilayer ceramic capacitor body and each oriented in a direction in parallel to the length direction. Specifically, the plurality of multilayer ceramic capacitor bodies are each arranged in the lamination direction T of each multilayer ceramic capacitor body 10. Each multilayer ceramic capacitor body 10 is provided in a direction in which the second main surface AB of one multilayer ceramic capacitor body 10 and the first main surface AA of the other multilayer ceramic capacitor body 10 among the adjacent multilayer ceramic capacitor bodies 10 are opposed to each other. In the multilayer ceramic capacitor bodies 10 adjacent to each other, the first external electrode 30A of one multilayer ceramic capacitor body 10 and the first external electrode 30A of the other multilayer ceramic capacitor body 10 are opposed to each other, and the second external electrode 30B of one multilayer ceramic capacitor body 10 and the second external electrode 30B of the other multilayer ceramic capacitor body 10 are opposed to each other.

A bonding material H1 such as solder may or may not be provided between the adjacent first external electrodes 30A. An aggregate (may be referred to as a "capacitor aggregate G") of the multilayer ceramic capacitor bodies is provided by the plurality of multilayer ceramic capacitor bodies 10 arranged in the lamination direction T.

### (Metal Terminal)

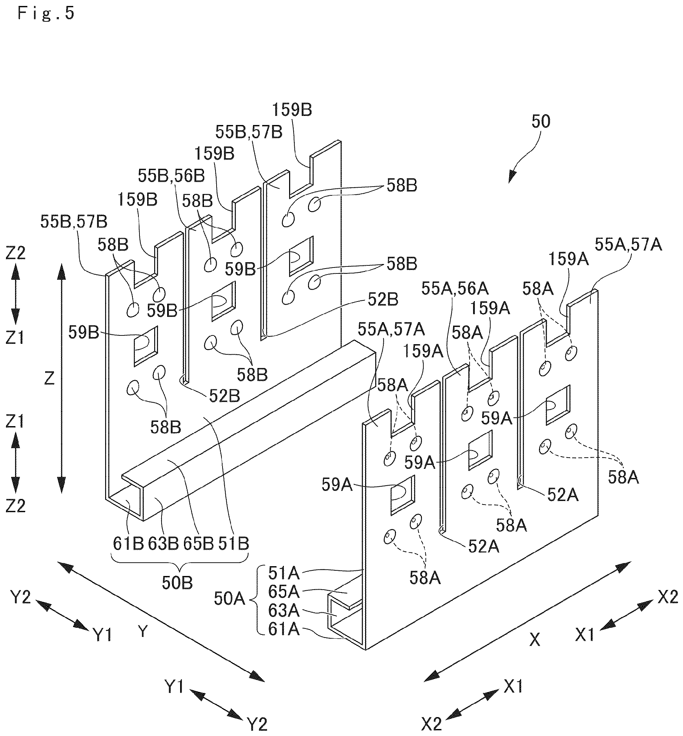

Next, the metal terminal 50 will be described with reference to FIGS. 5 to 8. The metal terminal 50 is a terminal mounted on a mounting surface of a mounting substrate on which the multilayer ceramic capacitor 1 is to be mounted. The first metal terminal 50A is connected to the first external electrode 30A. The second metal terminal 50B is connected to the second external electrode 30B. The metal terminal 50 is, for example, a plate-shaped lead frame. The metal terminal 50 includes a terminal body and a plating film provided on a surface of the terminal body.

The terminal body is preferably made of Ni, Fe, Cu, Ag, Cr, or an alloy containing at least one of these metals as a main component. For example, the metal of the base material of the terminal body may be an Fe-42Ni alloy, an Fe-18Cr alloy, or a Cu-8Sn alloy. In addition, from the viewpoint of heat dissipation, the metal of the base material of the terminal body may be oxygen-free copper or a Cu-based alloy having low resistance and high thermal conductivity. In this way, by making the material of the terminal body a copper-based material having a low resistance and good thermal conductivity, it is possible to realize a low ESR and a low thermal resistance. In the present embodiment, the metal of the base material of the terminal body may be a stainless steel or aluminum having low solder wettability. At least the surface of the metal of the base material of the terminal body is a surface having lower wettability of solder than the plating film of the outermost surface. The thickness of the terminal body is preferably about 0.05 mm or more and 0.5 mm or less.

The plating film preferably includes an upper plating film provided on the outermost surface of the plating film and a lower plating film provided below the upper plating film. For example, the plating film may have a two-layer configuration in which an upper plating film is provided on a lower plating film.

The lower plating film is preferably made of Ni, Fe, Cu, Ag, Cr, or an alloy containing at least one of these metals as a main component. More preferably, the lower plating film is made of Ni, Fe, Cr, or an alloy containing at least one of these metals as a main component. The heat resistance of the metal terminal 50 can be improved by providing the lower plating film with Ni, Fe, Cr, or an alloy containing at least one of these metals as a main component. The thickness of the lower plating film is preferably about 0.2 µm or more and 5.0 µm or less.

The upper plating film is preferably made of Sn, Ag, Au, or an alloy containing at least one of these metals as a main component. More preferably, the upper plating film is made of Sn or an alloy containing Sn as a main component. By providing the upper plating film with Sn or an alloy containing Sn as a main component, solderability between the external electrode 30 and the metal terminal 50 can be improved. The thickness of the upper plating film is preferably about 1.0 µm or more and 5.0 µm or less.

The upper plating film provided on the outermost surface of the plating film is a surface having a higher solder wettability than the metal surface of the base material of the terminal body. The upper plating film provided on the outermost surface of the plating film has a higher solder wettability than the lower plating film. For example, the lower plating film is preferably a Ni plating film. The upper plating film is preferably a Sn plating film.

### (First Metal Terminal)

Here, the first metal terminal 50A is provided so as to straddle the first external electrode 30A of each of the plurality of multilayer ceramic capacitor bodies 10. The first metal terminal 50A includes a first bonding portion 51A that is opposed to each of the first end surfaces CA, is connected to each of the first external electrodes 30A, and extends more in the direction toward the third direction outer side Z2 than each of the multilayer ceramic capacitor bodies 10, a first mounting portion 61A that extends in the direction toward the second direction middle side Y1 from an end portion of the first bonding portion 51A in the direction toward the third direction outer side Z2 and is connected to the land 92, a first rising portion 63A that extends in the direction toward the third direction middle side Z1 from an end portion of the first mounting portion 61A in the direction toward the second direction middle side Y1, and a first holding portion 65A that extends in the direction toward the second direction outer side Y2 from an end portion of the first rising portion 63A in the direction toward the third direction middle side Z1 and is opposed to each of the multilayer ceramic capacitor bodies 10 in the third direction Z.

The first bonding portion 51A extends, for example, parallel to the first direction X and the third direction Z. The first bonding portion 51A has, for example, a rectangular plate shape as a whole. The dimension of the first bonding portion 51A in the third direction Z is larger than the dimension of each multilayer ceramic capacitor body 10 (first external electrode 30A) in the third direction Z. Among the end portions of the first bonding portion 51A in the third direction Z, the end portion (may be referred to as a "tip portion of the first bonding portion 51A") on the side not connected to the first mounting portion 61A is substantially flush with the outer surface of each multilayer ceramic capacitor body 10 (first external electrode 30A), for example. Each end portion of the first bonding portion 51A in the first direction X is located more in the direction toward the first direction outer side X2 than the multilayer ceramic capacitor body 10 (first external electrode 30A). With such a configuration, in the multilayer ceramic capacitor 1 including the plurality of multilayer ceramic capacitor bodies 10, it is possible to improve the stability of the shape and the external dimensions of the multilayer ceramic capacitor 1.

The first bonding portion 51A has a plurality of first slit portions 52A extending in the third direction Z. Among the end portions of the first bonding portion 51A in the third direction Z, the end portion farther from the first mounting portion 61A may be referred to as a "tip portion of the first slit portion 52A".

The number of the first slit portions 52A is, for example, one smaller than the number of the multilayer ceramic capacitor bodies 10. The plurality of first slit portions 52A are provided at intervals in the first direction X. Each of the first slit portions 52A is provided at a position overlapping a portion between the adjacent second external electrodes 30B in the second direction Y. Each of the first slit portions 52A is open at the tip portion of the first bonding portion 51A. The internal space of each first slit portion 52A has, for example, a rectangular shape having the longitudinal direction in the third direction Z when viewed in the second direction Y.

The maximum dimension in the first direction X between the adjacent first slit portions 52A, that is, the maximum dimension of the plate width which is the dimension in the first direction X of one rising plate separated by the adjacent first slit portions 52A is preferably larger than the minimum dimension of the slit width which is the minimum dimension in the first direction X of the first slit portions 52A. With such a configuration, it is possible to maintain the strength of the metal terminal, and it is possible to further improve the stability of the shape and external dimensions of the multilayer ceramic capacitor 1.

For example, from the viewpoint of enhancing the strength of the first metal terminal 50A, the minimum dimension of the slit width is preferably 3% or more and 20% or less of the dimension of the first external electrode 30A of one multilayer ceramic capacitor body 10 in the first direction X. The maximum dimension of the plate width is preferably 80% or more and 120% or less of the dimension of the first external electrode 30A of one multilayer ceramic capacitor body 10 in the first direction X. The minimum dimension of the slit is preferably smaller than twice the thickness of the outer layer portion 12 of the multilayer ceramic capacitor body 10 in the lamination direction T. The maximum dimension of the plate width is preferably larger than the dimension of the thickness of the inner layer portion 11 of the multilayer ceramic capacitor body 10 in the lamination direction T.

The dimension of the first slit portion 52A in the third direction Z is preferably longer than a half of the dimension of the first external electrode 30A in the third direction Z. The dimension of the first slit portion 52A in the third direction Z is preferably shorter than the dimension of the first external electrode 30A in the third direction Z.

More specifically, the end portion of the first slit portion 52A on the mounting portion side is preferably located closer to the mounting portion than the middle of the first external electrode 30A of the multilayer ceramic capacitor body 10 in the third direction Z. The end portion of the first slit portion 52A on the mounting portion side is preferably located closer to the middle of the first external electrode 30A in the third direction Z than the end portion of the multilayer ceramic capacitor body 10 on the mounting portion side of the first external electrode 30A. With such a configuration, since the strength of the metal terminal can be maintained while allowing the metal terminal to be bent appropriately, it is possible to improve the assemblability at the time of manufacturing the multilayer ceramic capacitor 1, and it is possible to further improve the stability of the shape and the external dimension.

A region of the first bonding portion 51A sandwiched between the adjacent first slit portions 52A may be referred to as a "middle-side first inter-slit region 56A". In the first bonding portion 51A, a region sandwiched between an end side of the first bonding portion 51A in the first direction X and the first slit portion 52A closest to the end side may be referred to as an "end-side first inter-slit region 57A". The middle-side first inter-slit region 56A and the end-side first inter-slit region 57A may be referred to as a "first inter-slit region 55A" when it is not particularly necessary to distinguish between them.

In the present embodiment, the configurations of the first inter-slit regions 55A are substantially the same. Therefore, when the configuration of the first inter-slit region 55A is described, one first inter-slit region 55A will be described, and a description of the other first inter-slit regions 55A will be omitted in principle.

The first bonding portion 51A includes a plurality of first protrusions 58A protruding toward the first external electrode 30A.

Four first protrusions 58A are provided in one first inter-slit region 55A. Among the four first protrusions 58A, the two first protrusions 58A are provided at positions farther from the first mounting portion 61A than the middle of the first external electrode 30A in the third direction Z, and the other two first protrusions 58A are provided at positions closer to the first mounting portion 61A than the middle of the first external electrode 30A in the third direction Z. Among the four first protrusions 58A, the two first protrusions 58A farther from the first mounting portion 61A are provided so as to sandwich the middle of the first inter-slit region 55A in the first direction X. Among the four first protrusions 58A, the positions of the two first protrusions 58A farther from the first mounting portion 61A in the third direction Z are substantially the same. Among the four first protrusions 58A, the two first protrusions 58A closer to the first mounting portion 61A are provided so as to sandwich the middle of the first inter-slit region 55A in the first direction X. Among the four first protrusions 58A, the positions of the two first protrusions 58A closer to the first mounting portion 61A in the third direction Z are substantially the same. The distance between the first protrusions 58A provided in the first direction X is smaller than the distance between the first protrusions 58A provided in the third direction Z. The shape of the virtual quadrangle having the four first protrusions 58A as vertices is a rectangular shape having a longitudinal direction in the third direction Z.

In one first inter-slit region 55A, the four first protrusions 58A are in contact with or close to the first external electrode 30A. With such a configuration, it is possible to reduce or prevent interference between the electrode protrusion of the first external electrode 30A and the flat portion of the first bonding portion 51A. Since it is possible to easily bring the first bonding portion 51A into contact with one first external electrode 30A at a plurality of positions, it is possible to reduce or prevent the multilayer ceramic capacitor body 10 from being displaced with respect to the first metal terminal 50A. The four first protrusions 58A surround the middle of the first external electrode 30A in the first direction X and the third direction Z when viewed in the second direction Y. With such a configuration, it is possible to reduce or prevent interference between the electrode protrusion of the first external electrode 30A and the first protrusions 58A.

A portion of the surface of the first bonding portion 51A in the direction toward the second direction outer side Y2 that overlaps the first protrusion 58A in the second direction Y is recessed in the direction toward the second direction middle side Y1. This is because, as will be described later, the first protrusions 58A are provided by pushing and bending the plate material serving as the first bonding portion 51A in the direction toward the second direction middle side Y1 .

The first bonding portion 51A has first through-hole portions 59A and first notches 159A, each penetrating the first bonding portion 51A in the second direction Y at a position overlapping the first external electrode 30A in the second direction Y.

One first through-hole portion 59A and one first notch 159A are provided in one first inter-slit region 55A. Each of the first through-hole portion 59A and the first notch 159A has a substantially square shape when viewed in the second direction Y. The first through-hole portion 59A and the first notch 159A are provided at intervals in the third direction Z. The first notch 159A is open at the tip portion of the first bonding portion 51A. The first through-hole portion 59A is provided at a position between two first protrusions 58A farther from the first mounting portion 61A among the four first protrusions 58A and two first protrusions 58A closer to the first mounting portion 61A among the four first protrusions 58A in the third direction Z. The first through-hole portion 59A may be provided at a position overlapping, in the second direction Y, the middle of the first external electrode 30A in the first direction X and the third direction Z.

The first metal terminal 50A and the first external electrode 30A are bonded to each other by a bonding material H2 such as solder. The bonding material H2 is provided between a portion of the first bonding portion 51A where the first slit portions 52A and the first protrusions 58A are not provided, and the first external electrode 30A. It is preferred that the bonding material H2 is provided to be biased toward the tip portion side of the first bonding portion 51A. With such a configuration, for example, even when the first bonding portion 51A and the end portion of the first holding portion 65A are close to each other, it is possible to reduce or prevent the bonding material H2 such as solder from flowing between the first holding portion 65A and the first external electrode 30A of the multilayer ceramic capacitor body 10. Therefore, it is possible to prevent a situation in which the bonding material H2 such as solder flows into this portion and the multilayer ceramic capacitor body 10 excessively protrudes from the tip portion of the first bonding portion 51A. Therefore, in the multilayer ceramic capacitor 1 including the plurality of multilayer ceramic capacitor bodies 10, it is possible to further improve the stability of the shape and the external dimensions of the multilayer ceramic capacitor 1.

The first mounting portion 61A, the first rising portion 63A, and the first holding portion 65A are provided between the first external electrode 30A of the multilayer ceramic capacitor body 10 and the mounting substrate 91.

The first mounting portion 61A is a portion connected to the land 92. The first mounting portion 61A is connected to the land 92 by, for example, a bonding material H3 such as solder. The first mounting portion 61A extends parallel to the first direction X and the second direction Y. The first mounting portion 61A has, for example, a rectangular plate shape having a flat surface.

The first rising portion 63A extends in a direction approaching the multilayer ceramic capacitor body 10. The first rising portion 63A extends, for example, parallel to the first direction X and the third direction Z. The first rising portion 63A has, for example, a rectangular plate shape having a flat surface.

In the first rising portion 63A, the end portion of the first rising portion 63A in the direction toward the third direction middle side Z1 is located more in the direction toward the second direction outer side Y2 (adjacent to the first end surface CA) than the end portion of the first external electrode 30A in the direction toward the second direction middle side Y1. Specifically, the entire first rising portion 63A is located more in the direction toward the second direction outer side Y2 (adjacent to the first end surface CA) than the end portion of the first external electrode 30A in the direction toward the second direction middle side Y1. With such a configuration, it is possible to further reduce or prevent the occurrence of creeping discharge caused by the metal terminal 50, in which a current flows along the surface of the multilayer ceramic capacitor body 10.

The first rising portion 63A is provided more in the direction toward the second direction outer side Y2 than the end portions of the first internal electrodes 15A in the direction toward the second direction middle side Y1. In the first rising portion 63A, the end portion of the first rising portion 63A in the direction toward the third direction middle side Z1 is located more in the direction toward the second direction outer side Y2 (adjacent to the first end surface CA) than the end portions of the first internal electrodes 15A adjacent to the second end surface CB. Specifically, the entire first rising portion 63A is located more in the direction toward the second direction outer side Y2 (adjacent to the first end surface CA) than the end portions of the first internal electrodes 15A adjacent to the second end surface CB.

The first rising portion 63A is provided more in the direction toward the second direction middle side Y1 than the end portions of the intermediate electrodes 15C in the direction toward the second direction outer side Y2. In the first rising portion 63A, the end portion of the first rising portion 63A in the direction toward the third direction middle side Z1 is located more in the direction toward the second direction middle side Y1 than the end portions of the intermediate electrodes 15C adjacent to the first end surface CA. Specifically, the entire first rising portion 63A is located more in the direction toward the second direction middle side Y1 than the end portions of the intermediate electrodes 15C adjacent to the first end surface CA. That is, the first holding portion 65A overlaps the intermediate electrodes 15C when viewed in the third direction Z. With such a configuration, also in the multilayer ceramic capacitor 1 including the plurality of multilayer ceramic capacitor bodies 10 having the multiple configurations and the metal terminals 50, it is possible to secure a high capacitance while it is possible to stably hold the multilayer ceramic capacitor bodies 10 by the metal terminals 50.

On the first lateral surface BA, the end portion of the first external electrode 30A in the direction toward the second direction middle side Y1 is located more in the direction toward the second direction outer side Y2 than the end portions of the first internal electrodes 15A adjacent to the second end surface CB.

The first holding portion 65A extends parallel to the first direction X and the second direction Y. The first holding portion 65A has, for example, a rectangular plate shape having a flat surface. The first holding portion 65A is in contact with or close to each of the first external electrodes 30A and, more specifically, is close to each of the first external electrodes 30A. The bonding material H2 such as solder is provided between the first holding portion 65A and each of the first external electrodes 30A. The first holding portion 65A and a portion of the first lateral surface BA of each first external electrode 30A are bonded to each other by the bonding material H2. With such a configuration, electric current can be conducted between the first land 92A and the first external electrode 30A through the first holding portion 65A, such that it is possible to increase an electric current conduction path between the first land 92A and the first external electrode 30A. Accordingly, it is possible to improve ESR characteristics.

The end portion of the first holding portion 65A in the direction toward the second direction middle side Y1 is located more in the direction toward the second direction outer side Y2 (adjacent to the first end surface CA) than the end portion of the first external electrode 30A in the direction toward the second direction middle side Y1. The end portion of the first holding portion 65A in the direction toward the second direction middle side Y1 is located more in the direction toward the second direction outer side Y2 (adjacent to the first end surface CA) than the end portions of the first internal electrodes 15A adjacent to the second end surface CB. With such a configuration, it is possible to further reduce or prevent the occurrence of creeping discharge caused by the metal terminal 50, in which a current flows along the surface of the multilayer ceramic capacitor body 10.

The end portion of the first holding portion 65A in the direction toward the second direction outer side Y2 is separated from the first bonding portion 51A. With such a configuration, it is possible to reduce or prevent the bonding material H2 such as solder from flowing between the first holding portion 65A and the first external electrode 30A of the multilayer ceramic capacitor body 10. Therefore, it is possible to reduce or prevent a situation in which the bonding material H2 such as solder flows into this portion and the multilayer ceramic capacitor body 10 excessively protrudes from the tip portion of the first bonding portion 51A. Therefore, in the multilayer ceramic capacitor 1 including the plurality of multilayer ceramic capacitor bodies 10, it is possible to further improve the stability of the shape and the external dimensions of the multilayer ceramic capacitor 1. The end portion of the first holding portion 65A in the direction toward the second direction outer side Y2 is located, for example, more in the direction toward the second direction outer side Y2 than the middle of the first mounting portion 61A in the second direction Y.

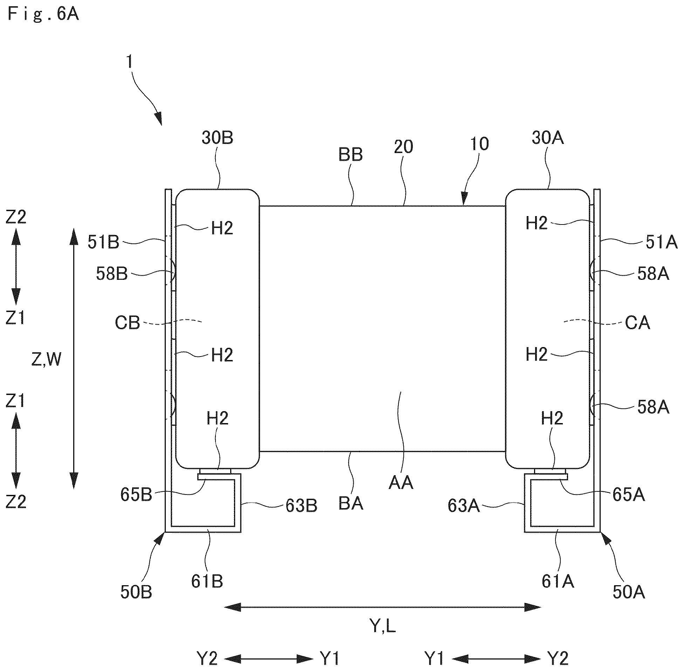

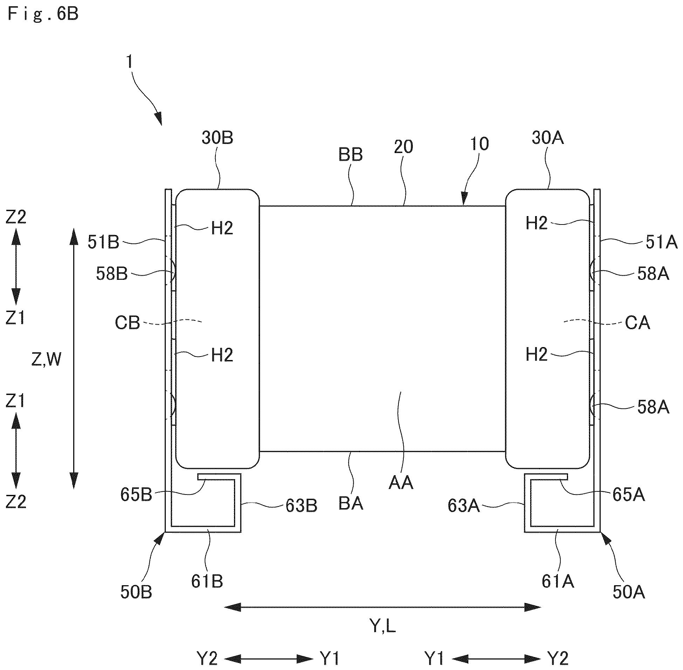

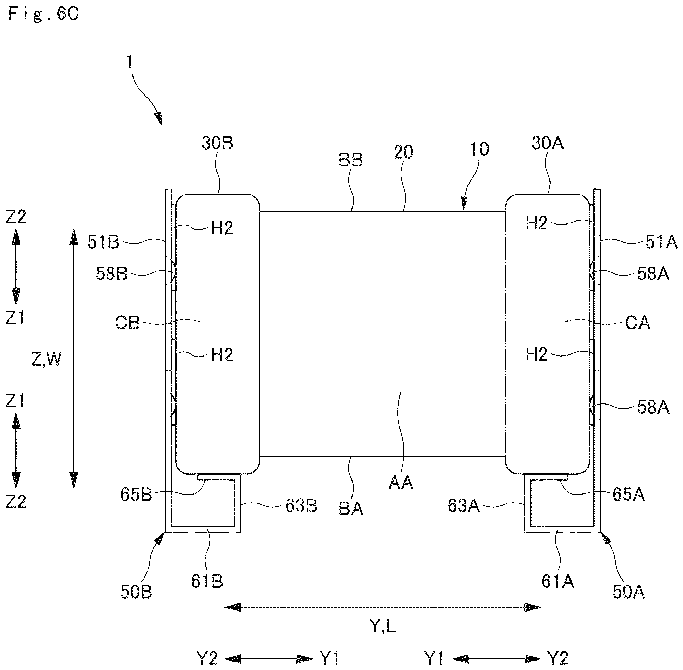

As shown in FIGS. 6B and 6C, the bonding material H2 such as solder may not be provided between the first holding portion 65A and the first external electrode 30A of the multilayer ceramic capacitor body 10. With such a configuration, it is possible to reduce or prevent the multilayer ceramic capacitor body 10 from excessively protruding from the tip portion of the first bonding portion 51A due to the influence of the thickness of the bonding material H2 such as solder sandwiched between the portions. Therefore, in the multilayer ceramic capacitor 1 including the plurality of multilayer ceramic capacitor bodies 10, it is possible to further improve the stability of the shape and the external dimensions of the multilayer ceramic capacitor 1.

The first land 92A and the first external electrode 30A may be close to each other (see FIG. 6B) or may be in contact with each other (see FIG. 6C). That is, a space may be provided between the first holding portion 65A and the first external electrode 30A of the multilayer ceramic capacitor body 10, or the first holding portion 65A and the first external electrode 30A of the multilayer ceramic capacitor body 10 may be in direct contact with each other.

By not bonding the first holding portion 65A and the first external electrode 30A, it is possible to reduce or prevent stress concentration on a portion of the first external electrode 30A and the multilayer body 20 overlapping the first holding portion 65A in the Z direction. With such a configuration, it is possible to reduce or prevent the occurrence of cracks in the multilayer body 20, such that it is possible to improve the mechanical strength of the multilayer ceramic capacitor body 10. Further, by bringing the first holding portion 65A and the first external electrode 30A into contact with each other, even when the first holding portion 65A and the first external electrode 30A are not bonded to each other, it is possible to improve the ESR characteristics to some extent. In addition, by bringing the first holding portion 65A and the first external electrode 30A into contact with each other without using the bonding material H2, it is possible to reduce or prevent the above-described stress concentration as compared with the case where the bonding material H2 is provided in this portion.

### (Second Metal Terminal)

The second metal terminal 50B is provided so as to straddle the second external electrode 30B of each of the plurality of multilayer ceramic capacitor bodies 10. The second metal terminal 50B includes a second bonding portion 51B that is opposed to each second end surface CB, is connected to each of the second external electrodes 30B, and extending more in the direction toward the third direction outer side Z2 than the multilayer ceramic capacitor body 10, a second mounting portion 61B that extends in the direction toward the second direction middle side Y1 from an end portion of the second bonding portion 51B in the direction toward the third direction outer side Z2 and is connected to the land 92, and a second rising portion 63B that extends in the direction toward the third direction middle side Z1 from the end portion of the second mounting portion 61B in the direction toward the second direction middle side Y1, and a second holding portion 65B that extends in the direction toward the second direction outer side Y2 from an end portion of the second rising portion 63B in the direction toward the third direction middle side Z1 and is opposed to each multilayer ceramic capacitor body 10 in the third direction Z.

The second bonding portion 51B extends, for example, parallel to the first direction X and the third direction Z. The second bonding portion 51B has, for example, a rectangular plate shape as a whole. The dimension of the second bonding portion 51B in the third direction Z is larger than the dimension of each multilayer ceramic capacitor body 10 (second external electrode 30B) in the third direction Z. Among the end portions of the second bonding portion 51B in the third direction Z, the end portion (may be referred to as a "tip portion of the second bonding portion 51B") on the side not connected to the second mounting portion 61B is substantially flush with the outer surface of each multilayer ceramic capacitor body 10 (second external electrode 30B), for example. Each end portion of the second bonding portion 51B in the first direction X is located more in the direction toward the first direction outer side X2 than the multilayer ceramic capacitor body 10 (second external electrode 30B). With such a configuration, in the multilayer ceramic capacitor 1 including the plurality of multilayer ceramic capacitor bodies 10, it is possible to improve the stability of the shape and the external dimensions of the multilayer ceramic capacitor 1.

The second bonding portion 51B has a plurality of second slit portions 52B extending in the third direction Z. Among the end portions of the second bonding portion 51B in the third direction Z, the end portion farther from the second mounting portion 61B may be referred to as a "tip portion of the second slit portion 52B".

The number of the second slit portions 52B is, for example, one smaller than the number of the multilayer ceramic capacitor bodies 10. The plurality of second slit portions 52B are provided at intervals in the first direction X. Each of the second slit portions 52B is provided at a position overlapping a portion between adjacent second external electrodes 30B in the second direction Y. Each of the second slit portions 52B is open at the tip portion of the second bonding portion 51B. The internal space of each second slit portion 52B has, for example, a rectangular shape having the longitudinal direction in the third direction Z when viewed in the second direction Y.

The maximum dimension in the first direction X between the adjacent second slit portions 52B, that is, the maximum dimension of the plate width which is the dimension in the first direction X of one rising plate separated by the adjacent second slit portions 52B, is preferably larger than the minimum dimension of the slit width which is the minimum dimension in the first direction X of the second slit portions 52B. With such a configuration, it is possible to maintain the strength of the metal terminal, and it is possible to further improve the stability of the shape and external dimensions of the multilayer ceramic capacitor 1.

For example, from the viewpoint of enhancing the strength of the second metal terminal 50B, the minimum dimension of the slit width is preferably 3% or more and 20% or less of the dimension of the second external electrode 30B of one multilayer ceramic capacitor body 10 in the first direction X. The maximum dimension of the plate width is preferably 80% or more and 120% or less of the dimension of the second external electrode 30B of one multilayer ceramic capacitor body 10 in the first direction X. The minimum dimension of the slit is preferably smaller than twice the thickness of the outer layer portion 12 of the multilayer ceramic capacitor body 10 in the lamination direction T. The maximum dimension of the plate width is preferably larger than the dimension of the thickness of the inner layer portion 11 of the multilayer ceramic capacitor body 10 in the lamination direction T.

The dimension of the second slit portion 52B in the third direction Z is preferably longer than a half of the dimension of the second external electrode 30B in the third direction Z. The dimension of the second slit portion 52B in the third direction Z is preferably shorter than the dimension of the second external electrode 30B in the third direction Z.

More specifically, the end portion of the second slit portion 52B on the mounting portion side is preferably located closer to the mounting portion than the middle of the second external electrode 30B of the multilayer ceramic capacitor body 10 in the third direction Z. The end portion of the second slit portion 52B on the mounting portion side is preferably located closer to the middle of the second external electrode 30B in the third direction Z than the end portion of the multilayer ceramic capacitor body 10 on the mounting portion side of the second external electrode 30B. With such a configuration, since the strength of the metal terminal can be maintained while allowing the metal terminal to be bent appropriately, it is possible to improve the assemblability at the time of manufacturing the multilayer ceramic capacitor 1, and it is possible to further improve the stability of the shape and the external dimension.

A region of the second bonding portion 51B sandwiched between the adjacent second slit portions 52B may be referred to as a "middle-side second inter-slit region 56B". In the second bonding portion 51B, a region sandwiched between an end side of the second bonding portion 51B in the first direction X and the second slit portion 52B closest to the end side may be referred to as an "end-side second inter-slit region 57B". The middle-side second inter-slit region 56B and the end-side second inter-slit region 57B may be referred to as a "second inter-slit region 55B" when it is not particularly necessary to distinguish between them.

In the present embodiment, the configurations of the second inter-slit regions 55B are substantially the same. Therefore, when the configuration of the second inter-slit region 55B is described, one second inter-slit region 55B will be described, and a description of the other second inter-slit regions 55B will be omitted in principle.

The second bonding portion 51B includes a plurality of second protrusions 58B protruding toward the second external electrode 30B.

Four second protrusions 58B are provided in one second inter-slit region 55B. Among the four second protrusions 58B, the two second protrusions 58B are provided at positions farther from the second mounting portion 61B than the middle of the second external electrode 30B in the third direction Z, and the other two second protrusions 58B are provided at positions closer to the second mounting portion 61B than the middle of the second external electrode 30B in the third direction Z. Among the four second protrusions 58B, the two second protrusions 58B farther from the second mounting portion 61B are provided so as to sandwich the middle of the second inter-slit region 55B in the first direction X. Among the four second protrusions 58B, the positions of the two second protrusions 58B farther from the second mounting portion 61B in the third direction Z are substantially the same. Among the four second protrusions 58B, the two second protrusions 58B closer to the second mounting portion 61B are provided so as to sandwich the middle of the second inter-slit region 55B in the first direction X. Among the four second protrusions 58B, the positions of the two second protrusions 58B closer to the second mounting portion 61B in the third direction Z are substantially the same. The distance between the second protrusions 58B provided in the first direction X is smaller than the distance between the second protrusions 58B provided in the third direction Z. The shape of the virtual quadrangle having the four second protrusions 58B as vertices is a rectangular shape having a longitudinal direction in the third direction Z.

In one second inter-slit region 55B, the four second protrusions 58B are in contact with or close to the second external electrode 30B. With such a configuration, it is possible to reduce or prevent interference between the electrode protrusion of the second external electrode 30B and the flat portion of the second bonding portion 51B. Since it is possible to easily bring the second bonding portion 51B into contact with one second external electrode 30B at a plurality of places, it is possible to reduce or prevent the multilayer ceramic capacitor body 10 from being displaced with respect to the second metal terminal 50B. The four second protrusions 58B surround the middle of the second external electrode 30B in the first direction X and the third direction Z when viewed in the second direction Y. With such a configuration, it is possible to reduce or prevent interference between the electrode protrusion of the second external electrode 30B and the second protrusions 58B.

A portion of the surface of the second bonding portion 51B in the direction toward the second direction outer side Y2 that overlaps the second protrusion 58B in the second direction Y is recessed in the direction toward the second direction middle side Y1. This is because, as will be described later, the second protrusions 58B are provided by pushing and bending the plate material serving as the second bonding portion 51B in the direction toward the second direction middle side Y1.

The second bonding portion 51B has second through-hole portions 59B and second notches 159B, each penetrating the second bonding portion 51B in the second direction Y at a position overlapping the second external electrode 30B in the second direction Y.

One second through-hole portion 59B and one second notch 159B are provided in one second inter-slit region 55B. Each of the second through-hole portion 59B and the second notch 159B has a substantially square shape when viewed in the second direction Y. The second through-hole portion 59B and the second notch 159B are provided at intervals in the third direction Z. The second notch 159B is open at the tip portion of the second bonding portion 51B. The second through-hole portion 59B is provided at a position between two second protrusions 58B farther from the second mounting portion 61B among the four second protrusions 58B and two second protrusions 58B closer to the second mounting portion 61B among the four second protrusions 58B in the third direction Z. The second through-hole portion 59B may be provided at a position overlapping, in the second direction Y, the middle of the second external electrode 30B in the first direction X and the third direction Z.

The second metal terminal 50B and the second external electrode 30B are bonded to each other by a bonding material H2 such as solder. The bonding material H2 is provided between a portion of the second bonding portion 51B where the second slit portions 52B and the second protrusions 58B are not provided, and the second external electrode 30B. It is preferred that the bonding material H2 is provided to be biased toward the tip portion side of the second bonding portion 51B. With such a configuration, for example, even when the second bonding portion 51B and the end portion of the second holding portion 65B are close to each other, it is possible to reduce or prevent the bonding material H2 such as solder from flowing between the second holding portion 65B and the second external electrode 30B of the multilayer ceramic capacitor body 10. Therefore, it is possible to prevent a situation in which the bonding material H2 such as solder flows into this portion and the multilayer ceramic capacitor body 10 excessively protrudes from the tip portion of the second bonding portion 51B. Therefore, in the multilayer ceramic capacitor 1 including the plurality of multilayer ceramic capacitor bodies 10, it is possible to further improve the stability of the shape and the external dimensions of the multilayer ceramic capacitor 1.

The second mounting portion 61B, the second rising portion 63B, and the second holding portion 65B are provided between the second external electrode 30B of the multilayer ceramic capacitor body 10 and the mounting substrate 91.

The second mounting portion 61B is a portion connected to the land 92. The second mounting portion 61B is connected to the land 92 by, for example, a bonding material H3 such as solder. The second mounting portion 61B extends parallel to the first direction X and the second direction Y. The second mounting portion 61B has, for example, a rectangular plate shape having a flat surface.

The second rising portion 63B extends in a direction approaching the multilayer ceramic capacitor body 10. The second rising portion 63B extends, for example, parallel to the first direction X and the third direction Z. The second rising portion 63B has, for example, a rectangular plate shape having a flat surface.

In the second rising portion 63B, the end portion of the second rising portion 63B in the direction toward the third direction middle side Z1 is located more in the direction toward the second direction outer side Y2 (adjacent to the second end surface CB) than the end portion of the second external electrode 30B in the direction toward the second direction middle side Y1. Specifically, the entire second rising portion 63B is located more in the direction toward the second direction outer side Y2 (adjacent to the second end surface CB) than the end portion of the second external electrode 30B in the direction toward the second direction middle side Y1. With such a configuration, it is possible to further reduce or prevent the occurrence of creeping discharge caused by the metal terminal 50, in which a current flows along the surface of the multilayer ceramic capacitor body 10.

The second rising portion 63B is provided more in the direction toward the second direction outer side Y2 than the end portions of the second internal electrodes 15B in the direction toward the second direction middle side Y1. In the second rising portion 63B, the end portion of the second rising portion 63B in the direction toward the third direction middle side Z1 is located more in the direction toward the second direction outer side Y2 (adjacent to the second end surface CB) than the end portions of the second internal electrodes 15B adjacent to the first end surface CA. Specifically, the entire second rising portion 63B is located more in the direction toward the second direction outer side Y2 (adjacent to the second end surface CB) than the end portions of the second internal electrodes 15B adjacent to the first end surface CA.

The second rising portion 63B is provided more in the direction toward the second direction middle side Y1 than the end portions of the intermediate electrodes 15C in the direction toward the second direction outer side Y2. In the second rising portion 63B, the end portion of the second rising portion 63B in the direction toward the third direction middle side Z1 is located more in the direction toward the second direction middle side Y1 than the end portions of the intermediate electrodes 15C adjacent to the second end surface CB. Specifically, the entire second rising portion 63B is located more in the direction toward the second direction middle side Y1 than the end portions of the intermediate electrodes 15C adjacent to the second end surface CB. That is, the second holding portion 65B overlaps the intermediate electrodes 15C when viewed in the third direction Z. With such a configuration, also in the multilayer ceramic capacitor 1 including the plurality of multilayer ceramic capacitor bodies 10 having the multiple configurations and the metal terminals 50, it is possible to secure a high capacitance while it is possible to stably hold the multilayer ceramic capacitor bodies 10 by the metal terminals 50.

On the first lateral surface BA, the end portion of the second external electrode 30B in the direction toward the second direction middle side Y1 is located more in the direction toward the second direction outer side Y2 than the end portions of the second internal electrodes 15B adjacent to the first end surface CA.

The second holding portion 65B extends parallel to the first direction X and the second direction Y. The second holding portion 65B has, for example, a rectangular plate shape having a flat surface. The second holding portion 65B is in contact with or close to each second external electrode 30B, specifically, close to each second external electrode 30B. The bonding material H2 such as solder is provided between the second holding portion 65B and each of the second external electrodes 30B. The second holding portion 65B and a portion of the first lateral surface BA of each second external electrode 30B are bonded to each other by the bonding material H2. With such a configuration, electric current can be conducted between the second land 92B and the second external electrode 30B through the second holding portion 65B, such that it is possible to increase an electric current conduction path between the second land 92B and the second external electrode 30B. Accordingly, it is possible to improve ESR characteristics.

The end portion of the second holding portion 65B in the direction toward the second direction middle side Y1 is located more in the direction toward the second direction outer side Y2 (adjacent to the second end surface CB) than the end portion of the second external electrode 30B in the direction toward the second direction middle side Y1. The end portion of the second holding portion 65B in the direction toward the second direction middle side Y1 is located more in the direction toward the second direction outer side Y2 (second end surface CB side) than the end portions of the second internal electrodes 15B adjacent to the second end surface CB. With such a configuration, it is possible to further reduce or prevent the occurrence of creeping discharge caused by the metal terminal 50, in which a current flows along the surface of the multilayer ceramic capacitor body 10.

The end portion of the second holding portion 65B in the direction toward the second direction outer side Y2 is separated from the second bonding portion 51B. With such a configuration, it is possible to reduce or prevent the bonding material H2 such as solder from flowing between the second holding portion 65B and the second external electrode 30B of the multilayer ceramic capacitor body 10. Therefore, it is possible to reduce or prevent a situation in which the bonding material H2 such as solder flows into this portion and the multilayer ceramic capacitor body 10 excessively protrudes from the tip portion of the second bonding portion 51B. Therefore, in the multilayer ceramic capacitor 1 including the plurality of multilayer ceramic capacitor bodies 10, it is possible to further improve the stability of the shape and the external dimensions of the multilayer ceramic capacitor 1. The end portion of the second holding portion 65B in the direction toward the second direction outer side Y2 is located, for example, more in the direction toward the second direction outer side Y2 than the middle of the second mounting portion 61B in the second direction Y.

As shown in FIGS. 6B and 6C, the bonding material H2 such as solder may not be provided between the second holding portion 65B and the second external electrode 30B of the multilayer ceramic capacitor body 10. With such a configuration, it is possible to reduce or prevent the multilayer ceramic capacitor body 10 from excessively protruding from the tip portion of the second bonding portion 51B due to the influence of the thickness of the bonding material H2 such as solder sandwiched between the portions. Therefore, in the multilayer ceramic capacitor 1 including the plurality of multilayer ceramic capacitor bodies 10, it is possible to further improve the stability of the shape and the external dimensions of the multilayer ceramic capacitor 1.

The second land 92B and the second external electrode 30B may be close to each other (see FIG. 6B) or may be in contact with each other (see FIG. 6C). That is, a space may be provided between the second holding portion 65B and the second external electrode 30B of the multilayer ceramic capacitor body 10, or the second holding portion 65B and the second external electrode 30B of the multilayer ceramic capacitor body 10 may be in direct contact with each other.

By not bonding the second holding portion 65B and the second external electrode 30B, it is possible to reduce or prevent stress concentration on a portion of the second external electrode 30B and the multilayer body 20 overlapping the second holding portion 65B in the Z direction. With such a configuration, it is possible to reduce or prevent the occurrence of cracks in the multilayer body 20, such that it is possible to improve the mechanical strength of the multilayer ceramic capacitor body 10. Further, by bringing the second holding portion 65B and the second external electrode 30B into contact with each other, even when the second holding portion 65B and the second external electrode 30B are not bonded to each other, it is possible to improve the ESR characteristics to some extent. In addition, by bringing the second holding portion 65B and the second external electrode 30B into contact with each other without using the bonding material H2, it is possible to reduce or prevent the above-described stress concentration as compared with the case where the bonding material H2 is provided in this portion.

### (Mounting Configuration of Multilayer Ceramic Capacitor)

Next, a mounting configuration 90 of the multilayer ceramic capacitor will be described with reference to FIGS. 9 to 11.

As shown in FIG. 9, the mounting configuration 90 includes the multilayer ceramic capacitor 1, a mounting substrate 91, and a bonding material H3.

The mounting substrate 91 is a substrate on which the multilayer ceramic capacitor 1 is mounted. The mounting substrate 91 is made of, for example, an insulating material such as resin, glass, glass epoxy, paper phenol, or ceramic. The mounting substrate 91 has a flat plate shape. The mounting substrate 91 is provided with a pair of lands 92.

Each land 92 is a terminal connected to the metal terminal 50. The lands 92 are spaced apart from each other on the surface of the mounting substrate 91. The lands 92 are provided in the second direction Y. Each land 92 is made of, for example, a highly electrically conductive metal such as Cu or Ag. Wiring (not shown) is connected to each land 92. The wiring is made of, for example, a highly electrically conductive metal such as Cu or Ag. Each land 92 has a first land 92A connected to the first metal terminal 50A and a second land 92B connected to the second metal terminal 50B.

The first land 92A overlaps the first mounting portion 61A when viewed in the third direction Z. The first land 92A has, for example, a rectangular shape having a longitudinal direction in the first direction X when viewed in the third direction Z. The dimension of the first land 92A in the first direction X and the dimension of the first mounting portion 61A in the first direction X are substantially the same, for example. The dimension of the first land 92A in the second direction Y is, for example, larger than the dimension of the first mounting portion 61A in the second direction Y.

The second land 92B overlaps the second mounting portion 61B when viewed in the third direction Z. The second land 92B has, for example, a rectangular shape having a longitudinal direction in the first direction X when viewed in the third direction Z. The dimension of the second land 92B in the first direction X and the dimension of the second mounting portion 61B in the first direction X are substantially the same, for example. The dimension of the second land 92B in the second direction Y is, for example, larger than the dimension of the second mounting portion 61B in the second direction Y.

The bonding material H3 bonds the multilayer ceramic capacitor 1 to the lands 92. The bonding material H3 is, for example, solder. The bonding material H3 is provided on each land 92. The first land 92A and the first metal terminal 50A are bonded to each other by the bonding material H3. The second land 92B and the second metal terminal 50B are bonded to each other by the bonding material H3.

Here, the end portion of the first land 92A in the direction toward the second direction outer side Y2 may be located more, for example, in the direction toward the second direction outer side Y2 than the end portion of the first mounting portion 61A in the direction toward the second direction outer side Y2. The position of the end portion of the first land 92A in the direction toward the second direction middle side Y1 in the second direction Y may be substantially the same as the position of the end portion of the first mounting portion 61A in the direction toward the second direction middle side Y1 in the second direction Y (see FIG. 9).

On the first land 92A, the bonding material H3 spreads and rises on the surface of the first bonding portion 51A on the second direction outer side Y2. The bonding material H3 is not spread or hardly spread on the surface of the first rising portion 63A on the second direction middle side Y1 .

With such a configuration, since it is possible to reduce or prevent the bonding material H3 from spreading up to the surface of the first rising portion 63A on the second direction middle side Y1, it is possible to increase the distance between the metal members including the bonding material H3, and it is possible to reduce or prevent the occurrence of creeping discharge.

The end portion of the second land 92B in the direction toward the second direction outer side Y2 may be located more, for example, in the direction toward the second direction outer side Y2 than the end portion of the second mounting portion 61B in the direction toward the second direction outer side Y2. The position of the end portion of the second land 92B in the direction toward the second direction middle side Y1 in the second direction Y may be substantially the same as the position of the end portion of the second mounting portion 61B in the direction toward the second direction middle side Y1 in the second direction Y.

On the second land 92B, the bonding material H3 spreads and rises on the surface of the second bonding portion 51B on the second direction outer side Y2. The bonding material H3 is not spread or hardly spread on the surface of the second rising portion 63B on the second direction middle side Y1.

With such a configuration, since it is possible to reduce or prevent the bonding material H3 from spreading up to the surface of the second rising portion 63B on the second direction middle side Y1, it is possible to increase the distance between the metal members including the bonding material H3, and it is possible to reduce or prevent the occurrence of creeping discharge.

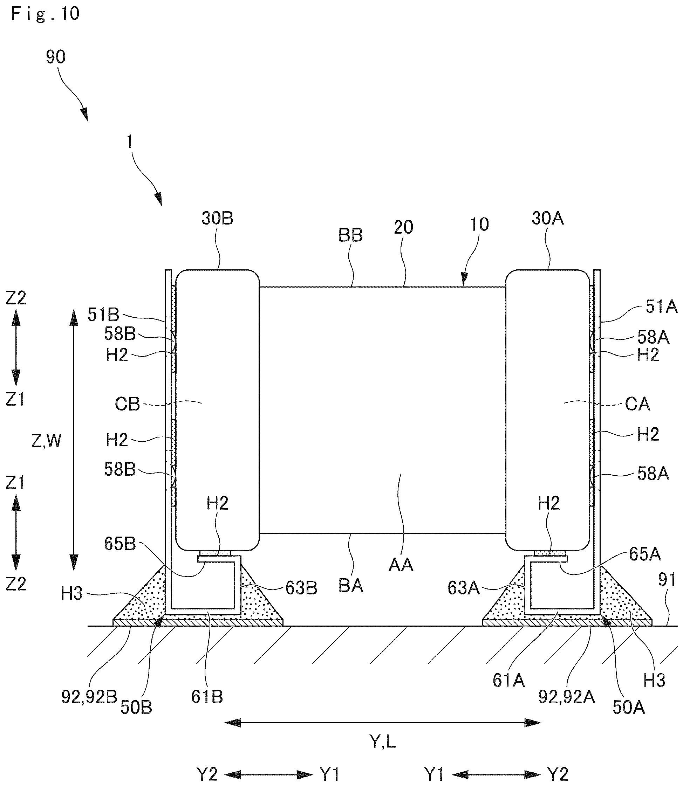

In addition, as shown in FIG. 10, the end portion of the first land 92A in the direction toward the second direction outer side Y2 may be located more, for example, in the direction toward the second direction outer side Y2 than the end portion of the first mounting portion 61A in the direction toward the second direction outer side Y2. For example, the end portion of the first land 92A in the direction toward the second direction middle side Y1 may be located more in the direction toward the second direction middle side Y1 than the end portion of the first mounting portion 61A in the direction toward the second direction middle side Y1.

On the first land 92A, the bonding material H3 spreads up the surface of the first bonding portion 51A on the second direction outer side Y2 and the surface of the first rising portion 63A on the second direction middle side Y1.

With such a configuration, since the first land 92A and the first external electrode 30A can be relatively firmly connected to each other, it is possible to enhance mountability.

The end portion of the second land 92B in the direction toward the second direction outer side Y2 may be located more, for example, in the direction toward the second direction outer side Y2 than the end portion of the second mounting portion 61B in the direction toward the second direction outer side Y2. The end portion of the second land 92B in the direction toward the second direction middle side Y1 may be located more, for example, in the direction toward the second direction middle side Y1 than the end portion of the second mounting portion 61B in the direction toward the second direction middle side Y1.

On the second land 92B, the bonding material H3 spreads up the surface of the second bonding portion 51B on second direction the outer side Y2 and the surface of the second rising portion 63B on the second direction middle side Y1.

With such a configuration, since the second land 92B and the second external electrode 30B can be relatively firmly connected to each other, it is possible to enhance mountability.

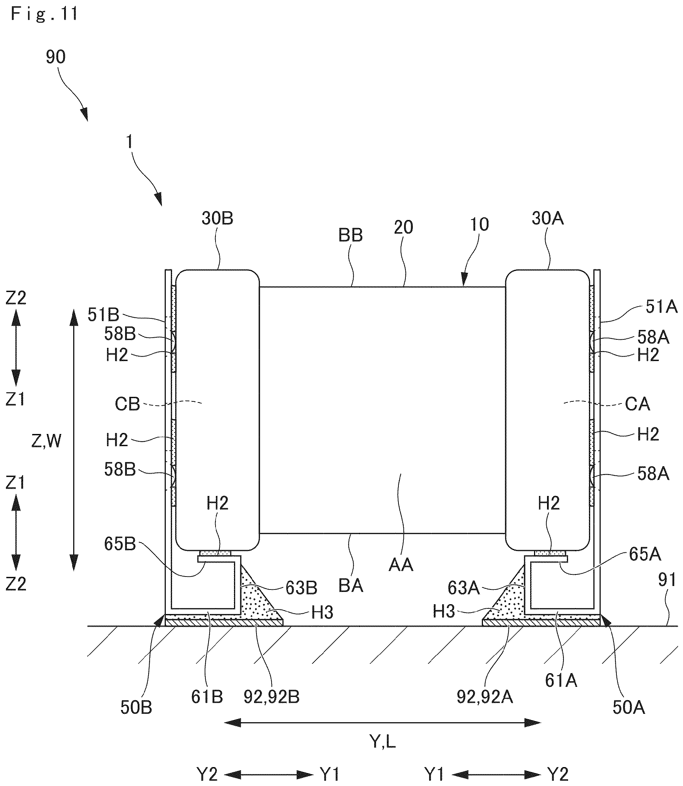

Further, as shown in FIG. 11, the position in the second direction Y of the end portion of the first land 92A in the direction toward the second direction outer side Y2 may be substantially the same as the position in the second direction Y of the end portion of the first mounting portion 61A in the direction toward the second direction outer side Y2. For example, the end portion of the first land 92A in the direction toward the second direction middle side Y1 may be located more in the direction toward the second direction middle side Y1 than the end portion of the first mounting portion 61A in the direction toward the second direction middle side Y1.

On the first land 92A, the bonding material H3 spreads and rises on the surface of the first rising portion 63A in the direction toward the second direction middle side Y1. The bonding material H3 is not spread or hardly spread on the surface of the first bonding portion 51A on the second direction outer side Y2.

With such a configuration, since it is possible to reduce or prevent the first land 92A and the bonding material H3 from protruding toward the second direction outer side Y2 with respect to the multilayer ceramic capacitor 1, it is possible to reduce or prevent interference between the first land 92A and the bonding material H3 and components and the like around the first land 92A. It is possible to easily mount the multilayer ceramic capacitor 1 in a relatively narrow space on the mounting substrate 91.

The position in the second direction Y of the end portion of the second land 92B in the direction toward the second direction outer side Y2 may be substantially the same as the position in the second direction Y of the end portion of the second mounting portion 61B in the direction toward the second direction outer side Y2. The end portion of the second land 92B in the direction toward the second direction middle side Y1 may be located more, for example, in the direction toward the second direction middle side Y1 than the end portion of the second mounting portion 61B in the direction toward the second direction middle side Y1.

On the second land 92B, the bonding material H3 spreads and rises on the surface of the second rising portion 63B on the second direction middle side Y1. The bonding material H3 is not spread or hardly spread on the surface of the second bonding portion 51B on the second direction outer side Y2.

With such a configuration, since it is possible to reduce or prevent the second land 92B and the bonding material H3 from protruding toward the second direction outer side Y2 with respect to the multilayer ceramic capacitor 1, it is possible to reduce or prevent interference between the second land 92B and the bonding material H3 and components and the like around the second land 92B. It is possible to easily mount the multilayer ceramic capacitor 1 in a relatively narrow space on the mounting substrate 91.

As described above, the multilayer ceramic capacitor 1 and the mounting configuration 90 thereof are excellent in the degrees of freedom of design of the land 92. The multilayer ceramic capacitor 1 and the mounting configuration 90 are excellent in versatility because the design of the lands 92 can be changed according to the mounting conditions.

### (Method for Manufacturing Multilayer Ceramic Capacitor)

Next, a method of manufacturing the multilayer ceramic capacitor 1 of the present embodiment will be described. The manufacturing method of the multilayer ceramic capacitor 1 of the present embodiment is not limited as long as the requirements described above are satisfied. However, a preferred manufacturing method includes the following steps. The details of each step will be described below.

### (Step of Manufacturing Each Multilayer Ceramic Capacitor Body)

A dielectric sheet for manufacturing the dielectric layer 14 and an electrically conductive paste for manufacturing the internal electrode 15 are prepared. The electrically conductive paste for manufacturing the dielectric sheet and the internal electrode contains a binder and a solvent. The binder and the solvent may be known.

An electrically conductive paste for manufacturing the internal electrodes 15 is printed on the dielectric sheet in a predetermined pattern by, for example, screen printing or gravure printing. Thus, the dielectric sheet on which the pattern of the first internal electrodes 15A and the pattern of the second internal electrodes 15B are provided and the dielectric sheet on which the pattern of the intermediate electrodes 15C is provided are prepared.

A portion functioning as the outer layer portion 12 adjacent to the first main surface AA is provided by laminating a predetermined number of dielectric sheets on which the internal electrode pattern is not printed. A dielectric sheet on which the pattern of the first internal electrodes 15A and the pattern of the second internal electrodes 15B are provided and a dielectric sheet on which the pattern of the intermediate electrodes 15C is provided are alternately laminated on the dielectric sheet to provide a portion functioning as the inner layer portion 11. A predetermined number of dielectric sheets on which no internal electrode pattern is printed are laminated on the portion functioning as the inner layer portion 11, such that a portion functioning as the outer layer portion 12 adjacent to the second main surface AB is provided. This produces a multilayer sheet. A multilayer block is produced by pressing the multilayer sheet in the laminating direction T by means of isostatic pressing or the like.

Next, the multilayer block is cut in each of the length direction L and the width direction W. The multilayer chip is cut out by cutting the multilayer block into a predetermined size. At this time, corner portions and ridge portions of the multilayer chip may be rounded by barrel polishing or the like.

The multilayer chip is fired to produce the multilayer body 20. The firing temperature is preferably 900°C or more and 1400°C or less depending on the materials of the dielectric layer 14 and the internal electrode 15.

An electrically conductive paste to be the base electrode layer 31 is applied to both end surfaces of the multilayer body 20. In the present embodiment, the base electrode layer 31 is a fired layer. An electrically conductive paste containing a glass component and a metal is applied to the multilayer body 20 by a method such as dipping.

Dipping is performed so that the base electrode layer 31 on the first end surface CA extends from the first end surface CA to a portion of the first main surface AA and a portion of the second main surface AB. Dipping is performed so that the base electrode layer 31 on the second end surface CB extends from the second end surface CB to a portion of the first main surface AA and a portion of the second main surface AB. At the same time, dipping is performed so that the base electrode layer on the first end surface CA extends to a portion of the first lateral surface BA and a portion of the second lateral surface BB. In addition, dipping is performed so that the base electrode layer 31 on the second end surface CB extends to a portion of the first lateral surface BA and a portion of the second lateral surface BB.

Thereafter, a firing treatment is performed to provide the base electrode layer 31. The temperature of the firing treatment at this time is preferably 700°C or more and 950°C or less. The multilayer chip before firing and the electrically conductive paste applied to the multilayer chip may be fired at the same time. In this case, the fired layer is preferably provided by firing a material to which a ceramic material is added instead of a glass component. At this time, it is particularly preferable to use the same type of ceramic material as the dielectric layer 14 as the ceramic material to be added. In this case, an electrically conductive paste is applied to the multilayer chip before firing, and the multilayer chip and the electrically conductive paste applied to the multilayer chip are simultaneously fired to provide the multilayer body 20 in which the fired layer is provided.

Thereafter, a plated layer is provided on the surface of the base electrode layer 31. In the present embodiment, the Ni plated layer and the Sn plated layer are provided on the base electrode layer. The Ni plated layer and the Sn plated layer are sequentially provided by electrolytic plating. As a plating method, for example, barrel plating is preferably used. Thus, the multilayer ceramic capacitor body 10 is obtained.

### (Step for Producing Metal Terminal)

First, a metal plate material to be the first metal terminal 50A is prepared. Next, the plate material is cut into a desired shape by a punching die or the like. At this time, the first slit portions 52A, the first through-hole portions 59A, and the first notches 159A are formed in the plate member. Then, the plate is sandwiched between, for example, a relief plate and an intaglio plate. Thus, the first protrusions 58A are formed on the plate member. Next, the plate material is bent into a desired shape by a bending die or the like. At this time, since a gap is secured between the tip portion of the first holding portion 65A and the first bonding portion 51A, it is possible to enhance workability at the time of bending. Next, a plating film is formed on the surface of the plate material. Thus, the first metal terminal 50A is obtained. Similarly, the second metal terminal is manufactured.

### (Step of Obtaining Capacitor Aggregate G)

The multilayer ceramic capacitor bodies 10 are provided in a predetermined direction. Thus, the capacitor aggregate G is obtained. The bonding material H1 may or may not be provided between the adjacent external electrodes 30.

### (Step of Bonding Each Multilayer Ceramic Capacitor Body to Metal Terminal)

A portion of the first external electrode 30A on the first end surface CA faces the first bonding portion 51A of the first metal terminal 50A. The first metal terminal 50A is provided at a position where each first slit portion 52A and a portion between adjacent second external electrodes 30B overlap in the second direction Y. In a case where the electrode protrusions are provided in the respective first external electrodes 30A, the first metal terminal 50A is provided in a position where the electrode protrusions of the respective first external electrodes 30A are accommodated in a virtual quadrangle having the four first protrusions 58A as vertices.

The bonding material H2 is provided between the first external electrode 30A and a portion of the first bonding portion 51A where the first slit portions 52A and the first protrusions 58A are not provided. Thus, the first external electrode 30A and the first metal terminal 50A are bonded to each other. At this time, since the first slit portions 52A, the first through-hole portions 59A, and the first notches 159A are provided in the first bonding portion 51A, the bonding material H2 can be provided between the first bonding portion 51A and the first external electrode 30A through the first slit portions 52A and the first through-hole portions 59A even in a state where the first bonding portion 51A and the first external electrode 30A are in contact with or close to each other. Similarly, the second external electrode 30B and the second metal terminal 50B are bonded to each other.

Thus, the multilayer ceramic capacitor 1 shown in FIG. 1 is obtained.

The obtained multilayer ceramic capacitor 1 is mounted on a mounting substrate 91. As the bonding material H3, for example, paste-like solder is prepared. The paste-like solder is provided on each of the first land 92A and the second land 92B. Next, the multilayer ceramic capacitor 1 is provided on the mounting substrate 91. The first metal terminal 50A is provided on the solder provided on the first land 92A, and the second metal terminal 50B is provided on the solder provided on the second land 92B. Next, the mounting substrate 91 on which the multilayer ceramic capacitor 1 is provided is housed in a reflow furnace, and heated to the reflow temperature of the solder. As a result, the solder is melted, and the first metal terminal 50A and the first land 92A are connected to each other, and the second metal terminal 50B and the second land 92B are connected to each other.

Thus, the multilayer ceramic capacitor 1 is mounted on the mounting substrate 91. The multilayer ceramic capacitor mounting configuration 90 shown in FIG. 9 and the like is obtained.

### (Advantageous Effects According to First Embodiment)

According to the present embodiment, it is possible to achieve the following advantageous effects.

According to the present embodiment, the first metal terminal 50A includes the first bonding portion 51A that is opposed to each of the first end surfaces CA, is connected to each of the first external electrodes 30A, and extends more in the direction toward the third direction outer side Z2 than the multilayer ceramic capacitor body 10, the first mounting portion 61A that extends in the direction toward the second direction middle side Y1 from the end portion of the first bonding portion 51A in the direction toward the third direction outer side Z2 and is connected to the land 92, and the first rising portion 63A that extends in the direction toward the third direction middle side Z1 from the end portion of the first mounting portion 61A on the second direction middle side Y1, and the first holding portion 65A that extends in the direction toward the second direction outer side Y2 from the end portion of the first rising portion 63A in the direction toward the third direction middle side Z1 and is opposed to each multilayer ceramic capacitor body 10 in the third direction Z. The first metal terminal 50A is provided so as to straddle the first external electrode 30A of each of the multilayer ceramic capacitor bodies 10.

The second metal terminal 50B includes the second bonding portion 51B that is opposed to each second end surface CB, is connected to each second external electrode 30B, and extends more in the direction toward the third direction outer side Z2 than the multilayer ceramic capacitor body 10, the second mounting portion 61B that extends in the direction toward the second direction middle side Y1 from the end portion of the second bonding portion 51B in the direction toward the third direction outer side Z2 and is connected to the land 92, and the second rising portion 63A that extends in the direction toward the third direction middle side Z1 from the end portion of the second mounting portion 61B in the direction toward the second direction middle side Y1 and the second holding portion 65B that extends in the direction toward the second direction outer side Y2 from the end portion of the second rising portion 63A in the direction toward the third direction middle side Z1 and is opposed to each multilayer ceramic capacitor body 10 in the third direction Z. The second metal terminal 50B is provided so as to straddle the second external electrode 30B of each multilayer ceramic capacitor body 10.

With such a configuration, for example, the first metal terminal 50A includes the first bonding portion 51A extending in the third direction Z, the first mounting portion 61A that extends in the direction toward the second direction middle side Y1 from the end portion of the first bonding portion 51A in the direction toward the third direction outer side Z2 and connected to the land 92, and the first rising portion 63A that extends in the direction toward the third direction middle side Z1 from the end portion of the first mounting portion 61A in the direction toward the second direction middle side Y1. The first bonding portion 51A rises in the direction toward the third direction middle side Z1 from the end portion of the first mounting portion 61A in the direction toward the second direction outer side Y2, and the first rising portion 63A rises in the direction toward the third direction middle side Z1 from the end portion of the first mounting portion 61A in the direction toward the second direction middle side Y1.

Therefore, the bonding material H3 provided between the first mounting portion 61A and the land 92 can spread up to both the first bonding portion 51A and the first rising portion 63A. Thus, for example, when the land 92 is designed so that the land 92 extends more in the direction toward the second direction outer side Y2 than the first bonding portion 51A, the bonding material H3 can spread up the first bonding portion 51A. When the land 92 is designed so that the land 92 extends more in the direction toward the second direction middle side Y1 than the first bonding portion 51A, the bonding material H3 can spread up to the first rising portion 63A. For example, it is possible to achieve the mounting configurations shown in FIGS. 9 to 11, and in any case thereof, it is possible to suitably bond the first metal terminal 50A and the land 92 to each other.

In addition, also in the second metal terminal 50B, advantageous effects similar to those of the first metal terminal 50A can be achieved by a configuration corresponding to that of the first metal terminal 50A.

Therefore, in the multilayer ceramic capacitor 1 including the plurality of multilayer ceramic capacitor bodies 10, it is possible to provide the multilayer ceramic capacitor 1 excellent in the degrees of freedom of design of the land 92.

In addition, with such a configuration, since the first bonding portion 51A and the plurality of first external electrodes 30A are bonded to each other and the second bonding portion 51B and the plurality of second external electrodes 30B are bonded to each other, it is possible to fix the relative positions of the multilayer ceramic capacitor bodies 10 in a state in which the plurality of multilayer ceramic capacitor bodies 10 are aligned. In addition, since the first holding portion 65A is opposed to the multilayer ceramic capacitor body 10 in the third direction Z and the second holding portion 65B is opposed to the multilayer ceramic capacitor body 10 in the third direction Z, it is possible to reduce or prevent positional displacement of each multilayer ceramic capacitor body 10 in the third direction Z. For example, even when the solder bonding the first metal terminal 50A and the first external electrode 30A is remelted when the multilayer ceramic capacitor 1 is mounted on a substrate, the first holding portion 65A holds the multilayer ceramic capacitor body 10 so that the multilayer ceramic capacitor body 10 does not fall off. The first holding portion 65A functions as a stopper for reducing or preventing the multilayer ceramic capacitor body 10 from falling off. As a result, in the multilayer ceramic capacitor 1 including the plurality of multilayer ceramic capacitor bodies 10, it is possible to reduce or prevent variations in the external dimensions of the multilayer ceramic capacitor 1, and thus it is possible to provide the multilayer ceramic capacitor 1 having excellent stability in shape and external dimensions.

In addition, with such a configuration, the end portion of the first mounting portion 61A in the direction toward the second direction outer side Y2 (in other words, the tip portion of the first metal terminal 50A) can be prevented from being opposed to the second metal terminal 50B. Accordingly, it is possible to reduce or prevent the occurrence of creeping discharge between the tip portion of the first metal terminal 50A and the second metal terminal 50B. Therefore, in the multilayer ceramic capacitor 1 including the plurality of multilayer ceramic capacitor bodies 10, it is possible to provide the multilayer ceramic capacitor 1 capable of reducing or preventing the occurrence of creeping discharge.

According to the present embodiment, the first bonding portion 51A has a plurality of first slit portions 52A extending in the third direction Z, the first slit portions 52A are provided at positions overlapping in the second direction Y with portions between adjacent first external electrodes 30A, the second bonding portion 51B has a plurality of second slit portions 52B extending in the third direction Z, and the second slit portions 52B are provided at positions overlapping in the second direction Y with portions between adjacent second external electrodes 30B.

With such a configuration, it is possible to allow excess bonding material H2 to escape from both of the adjacent first external electrodes 30A through one first slit portion 52A. The bonding material H2 can be provided on both of the adjacent first external electrodes 30A through one first slit portion 52A. Thus, the number of the first slit portions 52A can be reduced and the strength of the first bonding portion 51A can be increased as compared with a configuration in which one first slit portion 52A is provided for one first external electrode 30A, while the bonding material H2 is easily provided. The same advantageous effect can also be achieved in the portion of the multilayer ceramic capacitor 1 on the second metal terminal 50B side.

According to the present embodiment, the maximum dimension in the first direction X between the adjacent first slit portions 52A is larger than the minimum dimension in the first direction X of the first slit portion 52A, and the maximum dimension in the first direction X between the adjacent second slit portions 52B is larger than the minimum dimension in the first direction X of the second slit portion 52B.

With such a configuration, the strength of the first metal terminal 50A and the second metal terminal 50B is maintained, and it is possible to further improve the stability of the shape and the external dimensions of the multilayer ceramic capacitor 1.

According to the present embodiment, the dimension of the first slit portion 52A in the third direction Z is longer than the half of the dimension of the first external electrode 30A in the third direction Z and shorter than the dimension of the first external electrode 30A in the third direction Z, and the dimension of the second slit portion 52B in the third direction Z is longer than the half of the dimension of the second external electrode 30B in the third direction Z and shorter than the dimension of the second external electrode 30B in the third direction Z.

With such a configuration, since the strength of the metal terminal can be maintained while allowing the first metal terminal 50A and the second metal terminal 50B to be bent appropriately, it is possible to improve the assemblability at the time of manufacturing the multilayer ceramic capacitor 1, and it is possible to further improve the stability of the shape and the external dimension. In addition, it is possible to easily provide the bonding material H2 while securing the strength of the first bonding portion 51A and the second bonding portion 51B.

According to the present embodiment, the first bonding portion 51A has the plurality of first protrusions 58A protruding toward the first external electrode 30A, and the second bonding portion 51B has the plurality of second protrusions 58B protruding toward the second external electrode 30B.

An electrode protrusion that protrudes in the length direction L may be provided in a portion on the first end surface of the first external electrode 30A. In addition, it is considered that the protruding dimensions of the electrode protrusions vary depending on the multilayer ceramic capacitor body 10. Therefore, when the first metal terminal 50A is attached to the plurality of multilayer ceramic capacitor bodies 10, if the first bonding portion 51A comes into contact with an electrode protrusion having a relatively large protruding dimension, the first metal terminal 50A may be sloped, and the shape and the outer dimension of the multilayer ceramic capacitor body 10 may be unstable.

However, with such a configuration, it is possible to reduce or prevent interference between the electrode protrusion of the first external electrode 30A and the flat portion of the first bonding portion 51A by the contact between the first protrusion 58A and the peripheral portion of the electrode protrusion of the first external electrode 30A. As a result, variations in the external dimensions of the multilayer ceramic capacitor 1 can be reduced or prevented, such that it is possible to provide the multilayer ceramic capacitor 1 having excellent stability in shape and external dimensions.

According to the present embodiment, the first bonding portion 51A has the first through-hole portions 59A and the first notches 159A penetrating the first bonding portion 51A in the second direction Y at a position overlapping the first external electrode 30A in the second direction Y, and the second bonding portion 51B has the second through-hole portions 59B and the second notches 159A penetrating the second bonding portion 51B in the second direction Y at a position overlapping the second external electrode 30B in the second direction Y.

With such a configuration, it is possible to allow excess bonding material H2 to escape from between the first external electrode 30A and the first bonding portion 51A through the first through-hole portions 59A and the first notches 159A. The bonding material H2 can be provided between the first external electrode 30A and the first bonding portion 51A through the first through-hole portions 59A. This further facilitates the provision of the bonding material H2.

According to the present embodiment, the plurality of internal electrodes 15 include the first internal electrodes 15A each extending toward the first end surface CA, the second internal electrodes 15B each extending toward the second end surface CB, and the intermediate electrodes 15C each extending toward neither the first end surface CA nor the second end surface CB. The first rising portion 63A is provided more in the direction toward the second direction outer side Y2 than the end portions of the first internal electrodes 15A in the direction toward the second direction middle side Y1, and the second rising portion 63B is provided more in the direction toward the second direction outer side Y2 than the end portions of the second internal electrodes 15B in the direction toward the second direction middle side Y1.

In a multilayer ceramic capacitor having a so-called multiple-portion configuration, a leakage electric field is generated between an end portion of the first internal electrode 15A in the direction toward the second direction middle side Y1 and the first metal terminal 50A, such that creeping discharge is likely to occur. In addition, since a leakage electric field is generated between the second metal terminal 50B and the end portion of the second internal electrode 15B in the direction toward the second direction middle side Y1, creeping discharge is likely to occur.

However, by providing the first rising portion 63A more in the direction toward the second direction outer side Y2 than the end portions of the first internal electrodes 15A in the direction toward the second direction middle side Y1 to secure the distance between the end portion of the first internal electrode 15A in the direction toward the second direction middle side Y1and the first metal terminal 50A, it is possible to reduce or prevent the occurrence of creeping discharge. In addition, by providing the second rising portion 63B more in the direction toward the second direction outer side Y2 than the end portions of the second internal electrodes 15B in the direction toward the second direction middle side Y1 to secure the distance between the end portion of the second internal electrode 15B in the direction toward the second direction middle side Y1 and the second metal terminal 50B, it is possible to reduce or prevent the occurrence of creeping discharge.

### (Second Embodiment)

Hereinafter, a multilayer ceramic capacitor 201 according to a second embodiment of the present invention will be described. In the following description, differences from the multilayer ceramic capacitor 1 of the first embodiment will be mainly described. The same components as those of the first embodiment are denoted by the same reference numerals, and detailed descriptions thereof will be omitted.

### (First Metal Terminal)

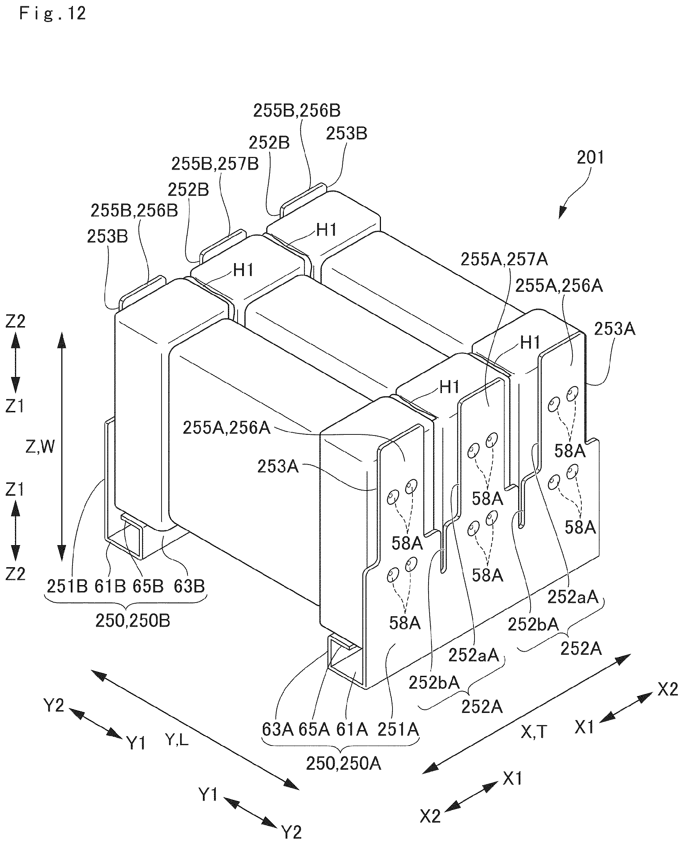

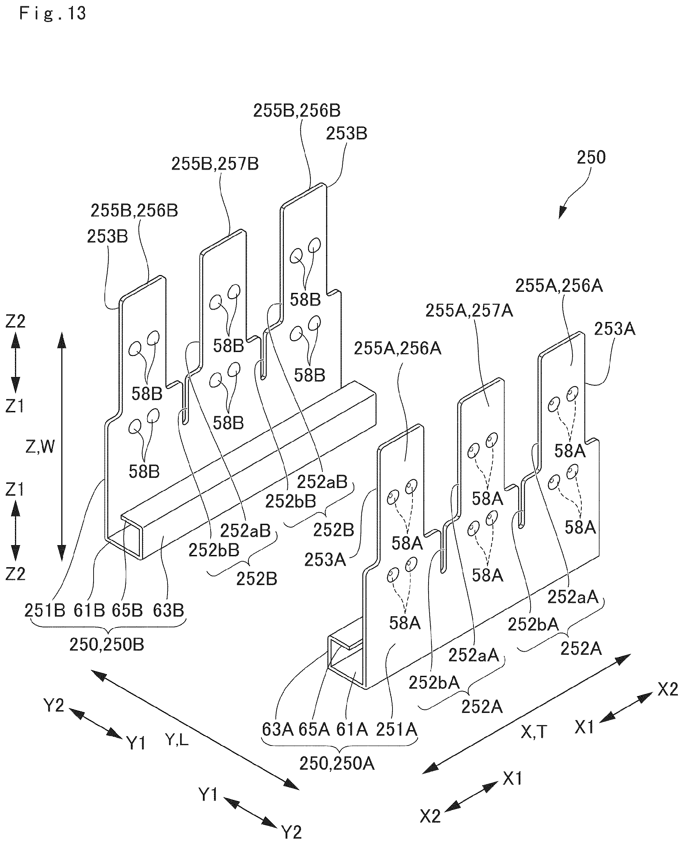

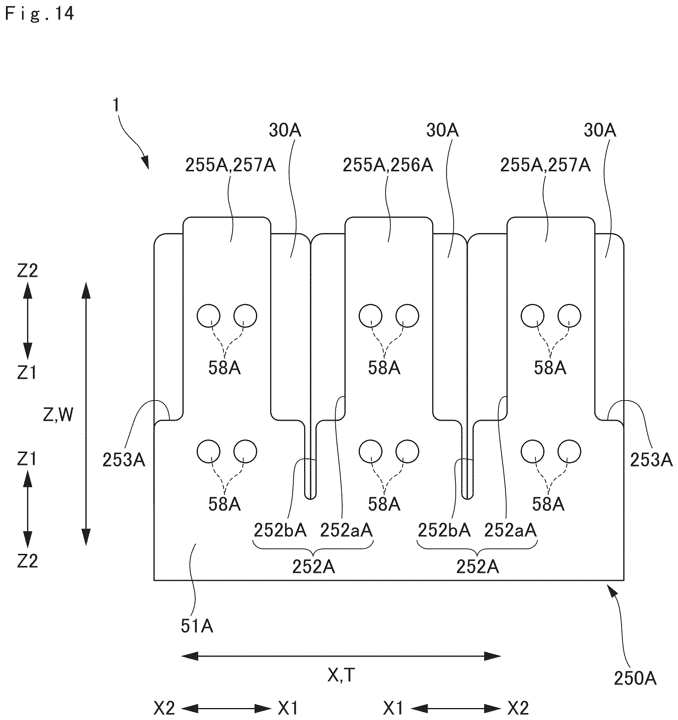

As shown in FIGS. 12 to 14, in the multilayer ceramic capacitor 201 according to the second embodiment, the configuration of the first bonding portion 251A is different from the configuration of the first bonding portion 51A of the first embodiment.

In the second embodiment, each first slit portion 252A is provided at a position overlapping a portion between adjacent first external electrodes 30A in the second direction Y.

The number of the first slit portions 252A is, for example, one smaller than the number of the multilayer ceramic capacitor bodies 10, and specifically, two. Each of the first slit portions 252A is provided at a position not overlapping the middle portion of each of the first external electrodes 30A in the first direction X. Each of the first slit portions 252A is open at the tip portion of the first bonding portion 51A.

The first slit portions 252A each overlap with both of the adjacent first external electrodes 30A as viewed in the second direction Y, and specifically, overlap with an end portion of one of the adjacent first external electrodes 30A adjacent to the other first external electrode 30A and an end portion of the other first external electrode 30A adjacent to the one first external electrode 30A in the second direction Y. This makes it easier to provide the bonding material H2.

In each of the first slit portions 252A, the dimension in the first direction X of the end portion on the side closer to the first mounting portion 61A among the end portions in the third direction Z of the first slit portion 252A is smaller than the dimension in the first direction X of the end portion on the side farther from the first mounting portion 61A among the end portions in the third direction Z of the first slit portion 252A.

More specifically, the dimension of each of the first slit portions 252A in the first direction X gradually decreases toward the first mounting portion 61A. Each of the first slit portions 252A includes, among two portions obtained by dividing the first slit portion 252A into two portions in the third direction Z, a first slit first portion 252aA which is a portion farther from the first mounting portion 61A, and a first slit second portion 252bA which is a portion closer to the first mounting portion 61A and in which a dimension of the portion in the first direction X is smaller than a dimension of the first slit first portion 252aA in the first direction X.

The internal space of the first slit first portion 252aA has a substantially rectangular shape having a longitudinal direction in the third direction Z when viewed in the second direction Y. The first slit first portion 252aA overlaps a portion between adjacent first external electrodes 30A when viewed in the second direction Y. The first slit first portion 252aA overlaps with both of the adjacent first external electrodes 30A as viewed in the second direction Y, and specifically, overlaps with an end portion of one of the adjacent first external electrodes 30A adjacent to the other first external electrode 30A and an end portion of the other first external electrode 30A adjacent to the one first external electrode 30A as viewed in the second direction Y. The first slit first portion 252aA overlaps the middle of the first external electrode 30A in the third direction Z when viewed in the second direction Y.

The dimension of the first slit first portion 252aA in the third direction Z is preferably longer than a half of the dimension of the first external electrode 30A in the third direction Z. The end portion of the first slit first portion 252aA adjacent to the first mounting portion 61A is preferably located closer to the first mounting portion 61A than the middle of the first external electrode 30A of the multilayer ceramic capacitor body 10 in the third direction Z. With such a configuration, it is possible to easily provide the bonding material H2 at a desired position through the first slit first portion 252aA.

The internal space of the first slit second portion 252bA has a substantially rectangular shape having a longitudinal direction in the third direction Z when viewed in the second direction Y. The first slit second portion 252bA overlaps a portion between adjacent first external electrodes 30A when viewed in the second direction Y. The entire first slit second portion 252bA is located closer to the first mounting portion 61A than the middle of the first external electrode 30A in the third direction Z. An end portion of the first slit second portion 252bA adjacent to the first mounting portion 61A is separated from the first mounting portion 61A more than an end portion of the first external electrode 30A adjacent to the first mounting portion 61A.

The shape of the first slit portion 252A is, for example, symmetric with respect to the first direction X. The position in the first direction X of the middle of the first slit first portion 252aA in the first direction X is substantially the same as the position in the first direction X of the middle of the first slit second portion 252bA in the first direction X.

In the second embodiment, the first bonding portion 251A includes a first notch portion 253A provided at an end portion of the first bonding portion 251A in the first direction X. The first notch portions 253A are provided at respective end portions of the first bonding portion 251A in the first direction X.

The first notch portion 253A extends in the third direction Z. The first notch portion 253A is open at the tip portion of the first bonding portion 251A. The first notch portion 253A is a substantially rectangular notch when viewed in the second direction Y, specifically, a substantially rectangular notch having a longitudinal direction in the third direction Z. The first notch portion 253A overlaps the end portion of the first external electrode 30A in the first direction X when viewed in the second direction Y. The position in the third direction Z of the end portion of each first notch portion 253A adjacent to the first mounting portion 61A is substantially the same as the position in the third direction Z of the end portion of the first slit first portion 252aA adjacent to the first mounting portion 61A. The dimension of the first notch portion 253A in the first direction X and the distance in the first direction X from one end side of the first slit first portion 252aA in one first slit portion 252A on one side in the first direction X to one end side of the first slit second portion 252bA on one side in the first direction X are substantially the same.

The dimension of the first notch portion 253A in the third direction Z is preferably longer than a half of the dimension of the first external electrode 30A in the third direction Z. The end portion of the first notch portion 253A adjacent to the first mounting portion is preferably located closer to the first mounting portion 61A than the middle of the first external electrode 30A of the multilayer ceramic capacitor body 10 in the third direction Z. With such a configuration, it is possible to easily provide the bonding material H2 at a desired position through the first notch portion 253A.

In the second embodiment, the dimension of the portion of the first inter-slit region 55A adjacent to the first mounting portion 61A in the first direction X is larger than the dimension of the portion of the first inter-slit region 255A on the side away from the first mounting portion 61A in the first direction X. With such a configuration, it is possible to increase the strength in the vicinity of the base of the first inter-slit region 55A.

In the second embodiment, among the four first protrusions 58A provided in one first inter-slit region 55A, two first protrusions 58A farther from the first mounting portion 61A are provided in the first direction X with the first slit first portion 252aA, and provided in the first direction X with the first notch portion 253A. Among the four first protrusions 58A provided in one first inter-slit region 55A, two first protrusions 58A closer to the first mounting portion 61A than the other two are located closer to the first mounting portion 61A than the first slit first portion 252aA and located closer to the first mounting portion 61A than the first notch portion 253A.

In the second embodiment, the first bonding portion 251A neither includes the first through-hole portion 59A nor the first notch 159A. With such a configuration, it is possible to increase the strength of the first bonding portion 251A. However, in the configuration of the second embodiment, the provision of the first through-hole portion 59A and the first notch 159A in the first bonding portion 251A is not hindered.

### (Second Metal Terminal)

In the multilayer ceramic capacitor 201 according to the second embodiment, the configuration of the second bonding portion 251B is different from the configuration of the second bonding portion 51B of the first embodiment.

In the second embodiment, each second slit portion 252B is provided at a position overlapping a portion between adjacent second external electrodes 30B in the second direction Y.

The number of the second slit portions 252B is, for example, one smaller than the number of the multilayer ceramic capacitor bodies 10, and specifically, two. Each of the second slit portions 252B is provided at a position not overlapping the middle portion of each of the second external electrodes 30B in the first direction X. Each of the second slit portions 252B is open at the distal end portion of the second bonding portion 51B.

The second slit portions 252B each overlap with both of the adjacent second external electrodes 30B as viewed in the second direction Y, and specifically, overlap with an end portion of one of the adjacent second external electrodes 30B adjacent to the other second external electrode 30B and an end portion of the other second external electrode 30B adjacent to the one second external electrode 30B in the second direction Y. This makes it easier to provide the bonding material H2.

In each of the second slit portions 252B, the dimension in the first direction X of the end portion on the side closer to the second mounting portion 61B among the end portions in the third direction Z of the second slit portion 252B is smaller than the dimension in the first direction X of the end portion on the side farther from the second mounting portion 61B among the end portions in the third direction Z of the second slit portion 252B.

More specifically, the dimension of each of the second slit portions 252B in the first direction X gradually decreases toward the second mounting portion 61B. Each of the second slit portions 252B includes, among two portions obtained by dividing the second slit portion 252B into two portions in the third direction Z, a second slit first portion 252aB which is a portion farther from the second mounting portion 61B, and a second slit second portion 252bB which is a portion closer to the second mounting portion 61B and in which the dimension of the portion in the first direction X is smaller than the dimension of the second slit first portion 252aB in the first direction X.

The internal space of the second slit first portion 252aB has a substantially rectangular shape having a longitudinal direction in the third direction Z when viewed in the second direction Y. The second slit first portion 252aB overlaps a portion between adjacent second external electrodes 30B when viewed in the second direction Y. The second slit first portion 252aB overlaps with both of the adjacent second external electrodes 30B as viewed in the second direction Y, specifically, overlaps with an end portion of one of the adjacent second external electrodes 30B adjacent to the other second external electrode 30B and an end portion of the other second external electrode 30B adjacent to the one second external electrode 30B as viewed in the second direction Y. The second slit first portion 252aB overlaps the middle of the second external electrode 30B in the third direction Z when viewed in the second direction Y.

The dimension of the second slit first portion 252aB in the third direction Z is preferably longer than a half of the dimension of the second external electrode 30B in the third direction Z. The end portion of the second slit first portion 252aB adjacent to the second mounting portion 61B is preferably located closer to the second mounting portion 61B than the middle of the second external electrode 30B of the multilayer ceramic capacitor body 10 in the third direction Z. With such a configuration, it is possible to easily provide the bonding material H2 at a desired position through the second slit first portion 252aB.

The internal space of the second slit second portion 252bB has a substantially rectangular shape having a longitudinal direction in the third direction Z when viewed in the second direction Y. The second slit second portion 252bB overlaps a portion between adjacent second external electrodes 30B when viewed in the second direction Y. The entire second slit second portion 252bB is located closer to the second mounting portion 61B than the middle of the second external electrode 30B in the third direction Z. An end portion of the second slit second portion 252bB adjacent to the second mounting portion 61B is separated from the second mounting portion 61B more than an end portion of the second external electrode 30B adjacent to the second mounting portion 61B.

The shape of the second slit portion 252B is, for example, symmetrical with respect to the first direction X. The position in the first direction X of the middle of the second slit first portion 252aB in the first direction X is substantially the same as the position in the first direction X of the middle of the second slit second portion 252bB in the first direction X.

In the second embodiment, the second bonding portion 251B includes a second notch portion 253B provided at an end portion of the second bonding portion 251B in the first direction X. The second notch portions 253B are provided at respective end portions of the second bonding portion 251B in the first direction X.

The second notch portion 253B extends in the third direction Z. The second notch portion 253B is open at the tip portion of the second bonding portion 251B. The second notch portion 253B is a substantially rectangular notch when viewed in the second direction Y, specifically, a substantially rectangular notch having a longitudinal direction in the third direction Z. The second notch portion 253B overlaps the end portion of the second external electrode 30B in the first direction X when viewed in the second direction Y. The position in the third direction Z of the end portion of each second notch portion 253B adjacent to the second mounting portion 61B is substantially the same as the position in the third direction Z of the end portion of the second slit first portion 252aB adjacent to the second mounting portion 61B. The dimension of the second notch portion 253B in the first direction X and the distance in the first direction X from one end side of the second slit first portion 252aB in one second slit portion 252B on one side in the first direction X to one end side of the second slit second portion 252bB on one side in the first direction X are substantially the same.

The dimension of the second notch portion 253B in the third direction Z is preferably longer than a half of the dimension of the second external electrode 30B in the third direction Z. The end portion of the second notch portion 253B adjacent to the second mounting portion 61B is preferably located closer to the second mounting portion 61B than the middle of the second external electrode 30B of the multilayer ceramic capacitor body 10 in the third direction Z. With such a configuration, it is possible to easily provide the bonding material H2 at a desired position through the second notch portion 253B.

In the second embodiment, the dimension of the portion of the second inter-slit region 55B adjacent to the second mounting portion 61B in the first direction X is larger than the dimension of the portion of the second inter-slit region 255B on the side away from the second mounting portion 61B in the first direction X. With such a configuration, it is possible to increase the strength in the vicinity of the base of the second inter-slit region 55B.

In the second embodiment, among the four second protrusions 58B provided in one second inter-slit region 55B, two second protrusions 58B farther from the second mounting portion 61B are provided to be aligned in the first direction X with the second slit first portion 252aB, and provided to be aligned in the first direction X with the second notch portion 253B. Among the four second protrusions 58B provided in one second inter-slit region 55B, two second protrusions 58B closer to the second mounting portion 61B than the other two are located closer to the second mounting portion 61B than the second slit first portion 252aB, and located closer to the second mounting portion 61B than the second notch portion 253B.

In the second embodiment, the second bonding portion 251B neither includes the second through-hole portion 59B nor the second notch 159B. With such a configuration, it is possible to increase the strength of the second bonding portion 251B. However, in the configuration of the second embodiment, the provision of the second through-hole portion 59B and the second notch 159B in the second bonding portion 251B is not hindered.

### (Advantageous Effects According to Second Embodiment)

According to the present embodiment, the following advantageous effects can be achieved.

According to the present embodiment, each first slit portion 252A is provided at a position overlapping a portion between adjacent first external electrodes 30A in the second direction Y, and each second slit portion 252B is provided at a position overlapping a portion between adjacent second external electrodes 30B in the second direction Y.

With such a configuration, it is possible to provide the bonding material H2 on both of the adjacent first external electrodes 30A through one first slit portion 252A, or to allow excess bonding material H2 to escape from both of the adjacent first external electrodes 30A through one first slit portion 252A. With such a configuration, it is possible to reduce the number of first slit portions 252A and increase the strength of the first bonding portion 251A as compared with a configuration in which one first slit portion 252A is provided for one first external electrode 30A, while easily providing the bonding material H2. In addition, with regard to the second metal terminal 50B as well, advantageous effects similar to those of the first metal terminal 50A can be achieved with a configuration corresponding to that of the first metal terminal 50A.

According to the present embodiment, the dimension in the first direction X of the end portion on the side closer to the first mounting portion 61A among the end portions in the third direction Z of the first slit portion 252A is smaller than the dimension in the first direction X of the end portion on the side farther from the first mounting portion 61A among the end portions in the third direction Z of the first slit portion 252A, and the dimension in the first direction X of the end portion on the side closer to the second mounting portion 61B among the end portions in the third direction Z of the second slit portion 252B is smaller than the dimension in the first direction X of the end portion farther from the second mounting portion 61B among the end portions of the second slit portion 252B in the third direction Z.

With such a configuration, it is easy to provide the bonding material H2 on the tip portion side of the first bonding portion 51A in the first bonding portion 51A, and it is possible to increase the strength of the first bonding portion 251A by providing the portion of the first bonding portion 251A adjacent to the first mounting portion 61A to be wider. In addition, regarding the second metal terminal 50B as well, it is possible to achieve advantageous effects similar to those of the first metal terminal 50A by a configuration corresponding to that of the first metal terminal 50A.

### (Third Embodiment)

Hereinafter, a multilayer ceramic capacitor 301 according to a third embodiment of the present invention will be described. In the following description, differences from the multilayer ceramic capacitor 201 of the second embodiment will be mainly described. The same components as those of the second embodiment are denoted by the same reference numerals, and detailed descriptions thereof will be omitted.

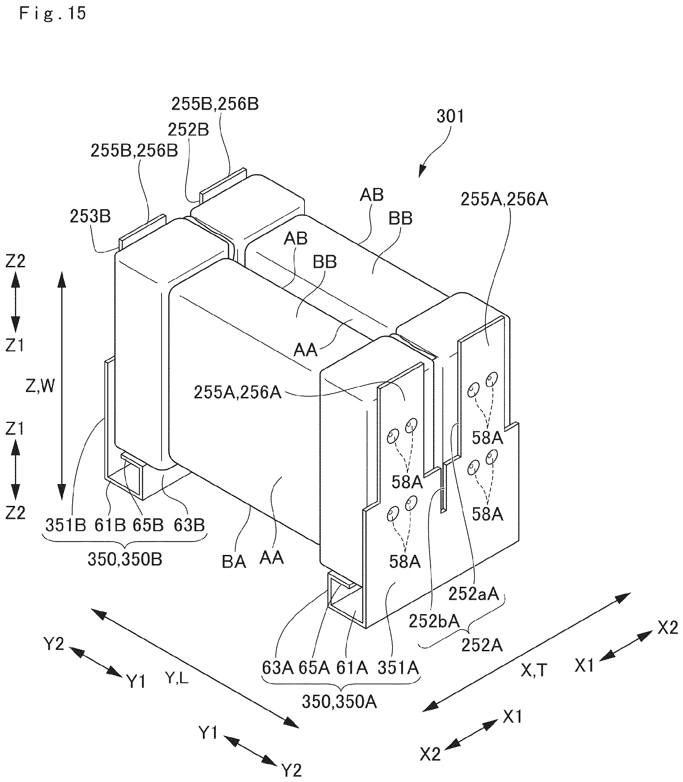

As shown in FIG. 15, the configuration of the multilayer ceramic capacitor 301 according to the third embodiment is substantially the same as the configuration of the multilayer ceramic capacitor 201 according to the second embodiment. However, the number of the multilayer ceramic capacitor bodies 10 included in the multilayer ceramic capacitor 301 of the third embodiment is two.

The dimension of the first metal terminal 350A of the third embodiment in the first direction X is smaller than the dimension of the first metal terminal 250A of the second embodiment in the first direction X. The first bonding portion 351A of the third embodiment has one first slit portion 252A.

The dimension of the second metal terminal 350B of the third embodiment in the first direction X is smaller than the dimension of the second metal terminal 350B of the second embodiment in the first direction X. The second bonding portion 351B of the third embodiment has one second slit portion 252B.

Thus, the number of multilayer ceramic capacitor bodies included in the multilayer ceramic capacitor is not particularly limited. The number of the plurality of multilayer ceramic capacitor bodies 10 may be two or three as exemplified in each embodiment. By adjusting the dimension of the first metal terminal in the first direction X and the dimension of the second metal terminal in the first direction X, or adjusting the number of the first slit portions and the number of the second slit portions, it is possible to cope with an increase or decrease in the number of the multilayer ceramic capacitor bodies included in the multilayer ceramic capacitor.

Also in the multilayer ceramic capacitor 1 having three or more multilayer ceramic capacitor bodies 10 in which it is difficult to secure the stability of the shape and the outer dimension, according to each embodiment, it is possible to provide the multilayer ceramic capacitor 1 excellent in the stability of the shape and the outer dimension.

### (Fourth Embodiment)

Hereinafter, a multilayer ceramic capacitor 401 according to a fourth embodiment of the present invention will be described. In the following description, differences from the multilayer ceramic capacitor 201 of the second embodiment will be mainly described. The same components as those of the second embodiment are denoted by the same reference numerals, and detailed descriptions thereof will be omitted.

### (First Metal Terminal)

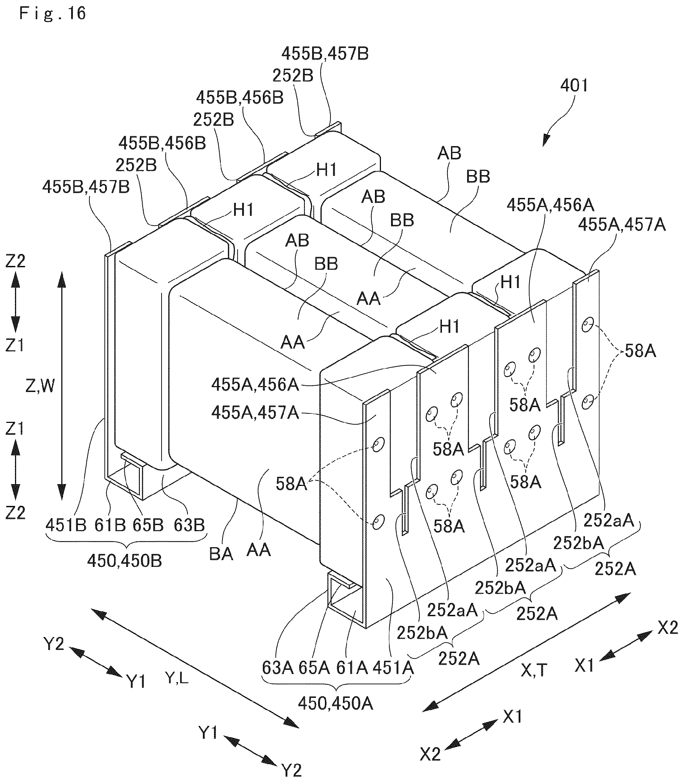

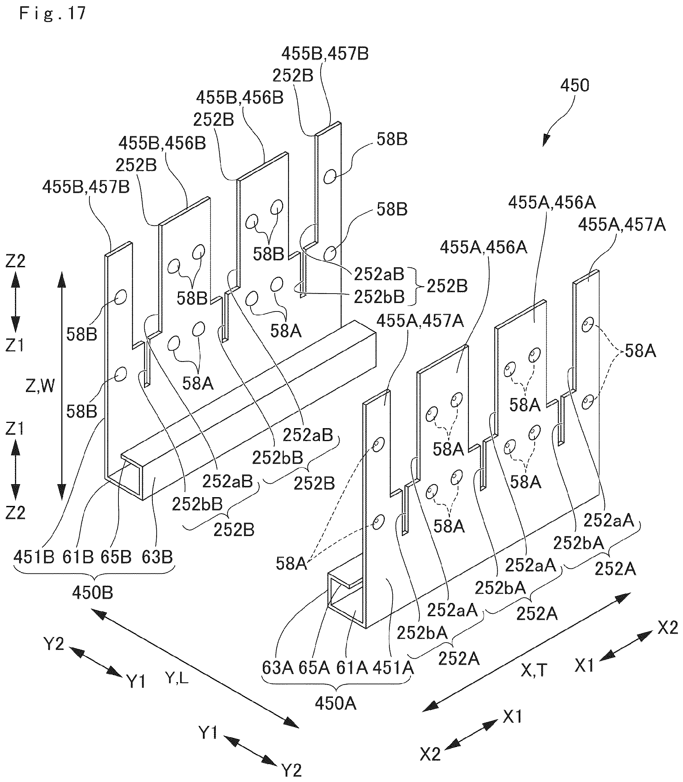

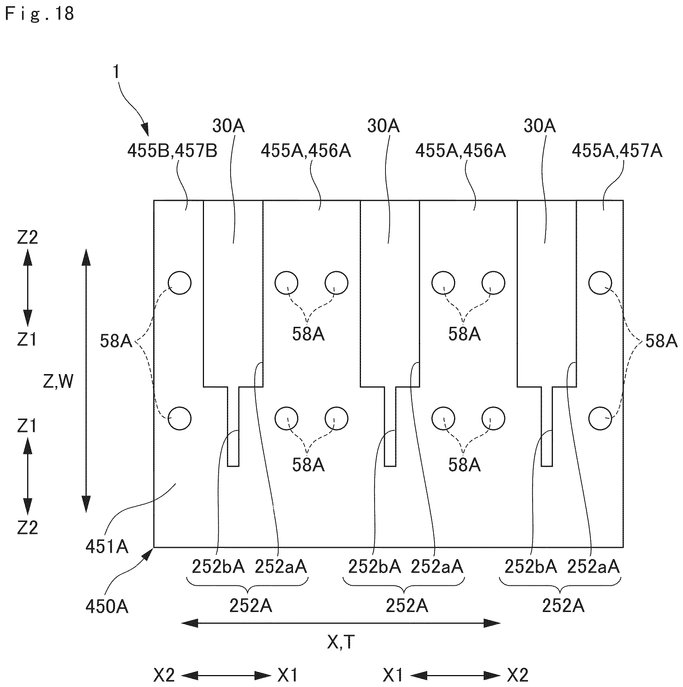

As shown in FIGS. 16 to 18, in the multilayer ceramic capacitor 401 of the fourth embodiment, the configuration of the first bonding portion 451A is different from the configuration of the first bonding portion 251A of the second embodiment.

The first bonding portion 451A of the fourth embodiment includes a plurality of first slit portions 252A. The number of the first slit portions 252A is the same as the number of the multilayer ceramic capacitor bodies 10, and specifically, is three. The shape of the first slit portion 252A of the fourth embodiment is substantially the same as the shape of the first slit portion 252A of the second embodiment, for example.

Each of the first slit portions 252A is provided at a position overlapping a corresponding one of the first external electrodes 30A in the second direction Y. Each of the first slit portions 252A is provided at a position overlapping in the second direction Y the middle of a corresponding one of the first external electrodes 30A in the first direction X, specifically, at a position overlapping the middle of the first external electrode 30A in the first direction X and the third direction Z in the second direction Y. With such a configuration, it is possible to reduce or prevent interference between the electrode protrusion of the first external electrode 30A and the first bonding portion 51A. In addition, since the electrode protrusion is inserted into the first slit portion 252A, it is possible to reduce or prevent the displacement of the first metal terminal 50A in the first direction X.

The first bonding portion 451A is not provided with any first notch portion 253A. Each end portion of the first bonding portion 451A in the first direction X is located more in the direction toward the first direction outer side X2 than the multilayer ceramic capacitor body 10 (the first external electrode 30A). With such a configuration, it is possible to improve the stability of the shape and outer dimensions of the multilayer ceramic capacitor.

The first bonding portion 451A is provided with four first inter-slit regions 455A, specifically, two middle-side first inter-slit regions 456A and two end-side first inter-slit regions 457A are provided.

The configuration of each middle-side first inter-slit region 456A is substantially the same as the configuration of the middle-side first inter-slit region 456A of the second embodiment. Each middle-side first inter-slit region 456A overlaps with both of the adjacent first external electrodes 30A as viewed in the second direction Y. With such a configuration, by bonding both of the adjacent first external electrodes 30A to one middle-side first inter-slit region 456A, it is possible to suitably reduce or prevent the positional deviation between the adjacent first external electrodes 30A.

The configuration of each of the end-side first inter-slit regions 457A is substantially the same as the configuration of any of the portions in a case where each of the middle-side first inter-slit regions 456A is equally divided into two portions in the first direction X. An end side of each of the end-side first inter-slit regions 457A on the first direction outer side X2 is a straight line extending in the third direction Z. Each end-side first inter-slit region 457A has a substantially L-shape as viewed in the second direction Y. One end-side first inter-slit region 457A has two first protrusions 58A.

The end-side first inter-slit region 457A is likely to have a small (i.e., narrow) dimension in the first direction X. However, the dimension in the first direction X of the end portion on the side closer to the first mounting portion 61A among the end portions in the third direction Z of the first slit portion 252A is smaller than the dimension in the first direction X of the end portion on the side farther from the first mounting portion 61A among the end portions in the third direction Z of the first slit portion 252A. Therefore, the dimension in the first direction X near the base of the end-side first inter-slit region 457A can be made relatively large. Accordingly, it is possible to easily secure the strength of the end portion side first inter-slit region 457A.

In one end-side first inter-slit region 457A, the two first protrusions 58A are provided at intervals in the third direction Z. The two first protrusions 58A are provided so as to sandwich the middle in the third direction Z of the first external electrode 30A in the third direction Z when viewed in the second direction Y. Among the two first protrusions 58A, the first protrusion 58A farther from the first mounting portion 61A is provided in the second direction Y with the first slit first portion 252aA. Among the two first protrusions 58A, the first protrusion 58A closer to the first mounting portion 61A is provided in the second direction Y with the first slit second portion 252bA.

The first bonding portion 451A is not provided with the first through-hole portion 259A. The first bonding portion 451A may be provided with a first through-hole portion 59A and a first notch 159A. However, since the end portion side first inter-slit region 457A is provided to be relatively thin, it is preferred that the first through-hole portion 59A or the first notch 159A are not provided in the end portion side first inter-slit region 457A. With such a configuration, it is possible to easily secure the strength of the first bonding portion 451A. In addition, the provision of the first through-hole portion 259A in the end portion side first inter-slit region 457A is not hindered.

### (Second Metal Terminal)

In the multilayer ceramic capacitor 401 of the fourth embodiment, the configuration of the second bonding portion 451B is different from the configuration of the second bonding portion 251B of the second embodiment.

The second bonding portion 451B of the fourth embodiment includes a plurality of second slit portions 252B. The number of the second slit portions 252B is the same as the number of the multilayer ceramic capacitor bodies 10, and specifically, is three. The shape of the second slit portion 252B of the fourth embodiment is substantially the same as the shape of the second slit portion 252B of the second embodiment, for example.

Each of the second slit portions 252B is provided at a position overlapping a corresponding one of the second external electrodes 30B in the second direction Y. Each of the second slit portions 252B is provided at a position overlapping in the second direction Y the middle of a corresponding one of the second external electrodes 30B in the first direction X, specifically, at a position overlapping the middle of the second external electrode 30B in the first direction X and the third direction Z in the second direction Y. With such a configuration, it is possible to reduce or prevent interference between the electrode protrusion of the second external electrode 30B and the second bonding portion 51B. In addition, since the electrode protrusion is inserted into the second slit portion 252B, it is possible to reduce or prevent the displacement of the second metal terminal 50B in the first direction X.

The second bonding portion 451B is not provided with any second notch portion 253B. Each end portion of the second bonding portion 451B in the first direction X is located more in the direction toward the first direction outer side X2 than the multilayer ceramic capacitor body 10 (the second external electrode 30B). With such a configuration, it is possible to improve the stability of the shape and outer dimensions of the multilayer ceramic capacitor.

The second bonding portion 451B is provided with four second inter-slit regions 455B, specifically, two middle-side second inter-slit regions 456B and two end-side second inter-slit regions 457B are provided.

The configuration of each middle-side second inter-slit region 456B is substantially the same as the configuration of the middle-side second inter-slit region 456B of the second embodiment. Each middle-side second inter-slit region 456B overlaps with both of the adjacent second external electrodes 30B as viewed in the second direction Y. With such a configuration, by bonding both of the adjacent second external electrodes 30B to one middle-side second inter-slit region 456B, it is possible to suitably reduce or prevent the positional deviation between the adjacent second external electrodes 30B.

The configuration of each of the end-side second inter-slit regions 457B is substantially the same as the configuration of any of the portions in a case where each of the middle-side second inter-slit regions 456B is equally divided into two portions in the first direction X. An end side of each end-side second inter-slit region 457B on the first direction outer side X2 is a straight line extending in the third direction Z. Each end-side second inter-slit region 457B has a substantially L-shape as viewed in the second direction Y. One end-side second inter-slit region 457B has two second protrusions 58B.

The end-side second inter-slit region 457B is likely to have a small size (i.e., narrow) in the first direction X. However, the dimension in the first direction X of the end portion on the side closer to the second mounting portion 61B among the end portions in the third direction Z of the second slit portion 252B is smaller than the dimension in the first direction X of the end portion on the side farther from the second mounting portion 61B among the end portions in the third direction Z of the second slit portion 252B. Therefore, the dimension in the first direction X near the base of the end-side second inter-slit region 457B can be made relatively large. Accordingly, it is possible to easily secure the strength of the end portion side second inter-slit region 457B.

In one end-side second inter-slit region 457B, the two second protrusions 58B are provided at intervals in the third direction Z. The two second protrusions 58B are provided so as to sandwich the middle in the third direction Z of the second external electrode 30B in the third direction Z when viewed in the second direction Y. Among the two second protrusions 58B, the second protrusion 58B farther from the second mounting portion 61B is provided in the second direction Y with the second slit first portion 252aB. Among the two second protrusions 58B, the second protrusion 58B closer to the second mounting portion 61B is provided to be aligned in the second direction Y with the second slit second portion 252bB.

The second bonding portion 451B is not provided with the second through-hole portion 259B. The second bonding portion 451B may be provided with a second through-hole portion 59B and a second notch 159B. However, since the end portion side second inter-slit region 457B is provided to be relatively thin, it is preferred that the second through-hole portion 59B or the second notch 159B are not provided in the end portion side second inter-slit region 457B. With such a configuration, it is possible to easily secure the strength of the second bonding portion 451B. In addition, the provision of the second through-hole portion 259B in the end portion side second inter-slit region 457B is not hindered.

### (Modified Example of the Embodiment)

Although embodiments of the present invention have been described above, the present invention is not limited to the above-described embodiments, and various modifications and variations are possible.

For example, in the above-described embodiments, the multilayer ceramic capacitor body 10 is a multilayer ceramic capacitor having a two-portion configuration, but the multilayer ceramic capacitor body 10 may be a multilayer ceramic capacitor having a three-portion configuration or a multilayer ceramic capacitor having a multiple-configuration of four or more portions.

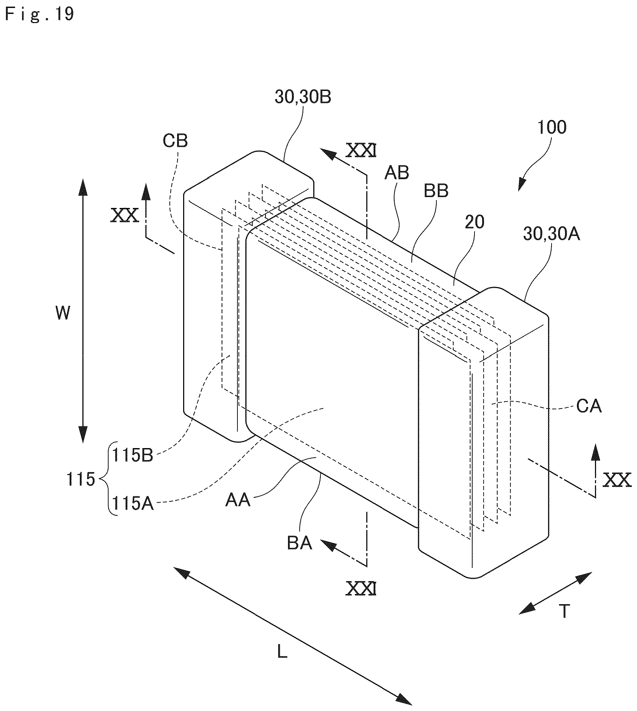

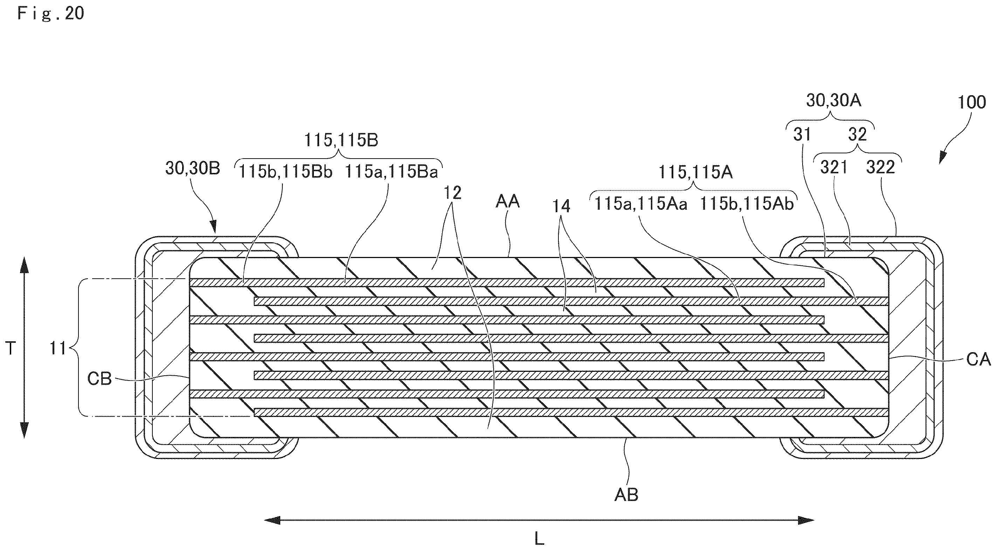

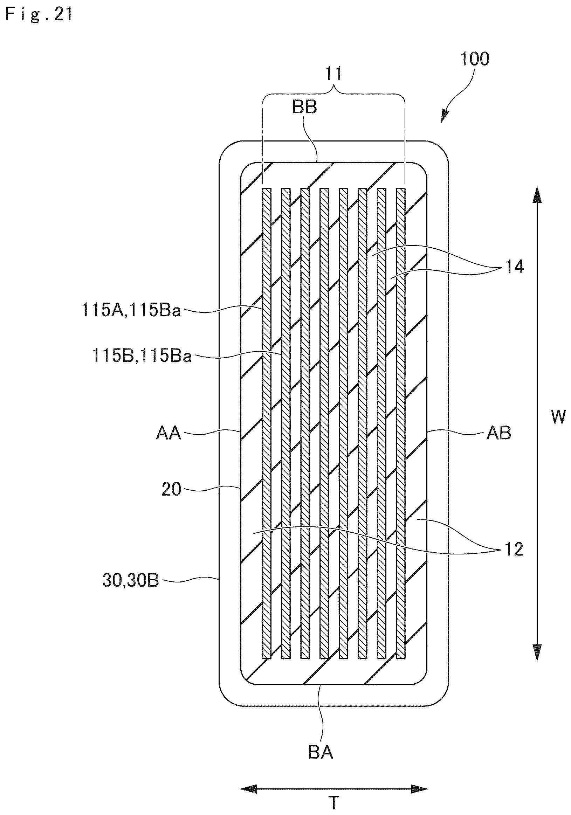

The multilayer ceramic electronic component body is not limited to a multilayer ceramic capacitor having a multiple portion configuration. For example, the multilayer ceramic capacitor body 100 shown in FIGS. 19 to 21 is a multilayer ceramic capacitor not having a multiple portion configuration. Hereinafter, the configuration of the multilayer ceramic capacitor body 100 will be described. In addition, differences from the multilayer ceramic capacitor bodies 10 according to the embodiments will be mainly described, and the same components as those of the multilayer ceramic capacitor bodies 10 according to the embodiments will be denoted by the same reference numerals, and descriptions thereof may be omitted.

As shown in FIGS. 19 to 21, the internal electrodes 115 of the multilayer ceramic capacitor body 100 include a plurality of first internal electrodes 115A and a plurality of second internal electrodes 115B. The first internal electrodes 115A are each exposed only at the first end surface CA. The second internal electrodes 115B are each exposed only at the second end surface CB. The first internal electrodes 115A and the second internal electrodes 115B are alternately provided. The intermediate electrode 15C is not provided in the multilayer body 120.

Each of the first internal electrodes 115A has a first counter portion 115Aa and a first extension portion 115Ab. The first counter portion 115Aa is a portion of the first internal electrode 115A opposed to the second internal electrode 115B adjacent in the lamination direction T. The first counter portion 115Aa is located at a middle portion between the end surfaces C. The first extension portion 115Ab is a portion of the first internal electrode 115A that extends from the first counter portion 115Aa toward the first end surface CA. The first extension portion 115Ab is exposed at the first end surface CA. The first extension portion 115Ab is connected to the first external electrode 3A.

Each of the second internal electrodes 115B has a second counter portion 115Ba and a second extension portion 115Bb. The second counter portion 115Ba is a portion of the second internal electrode 115B opposed to the adjacent first internal electrode 115A (the first counter portion 115Aa). The second counter portion 115Ba is located at a middle portion between the end surfaces C. The second extension portion 115Bb is a portion of the second internal electrode 115B which extends toward the second end surface CB from the second counter portion 115Ba. The second extension portion 115Bb is exposed at the second end surface CB. The second extension portion 115Bb is connected to the second external electrode 3B.

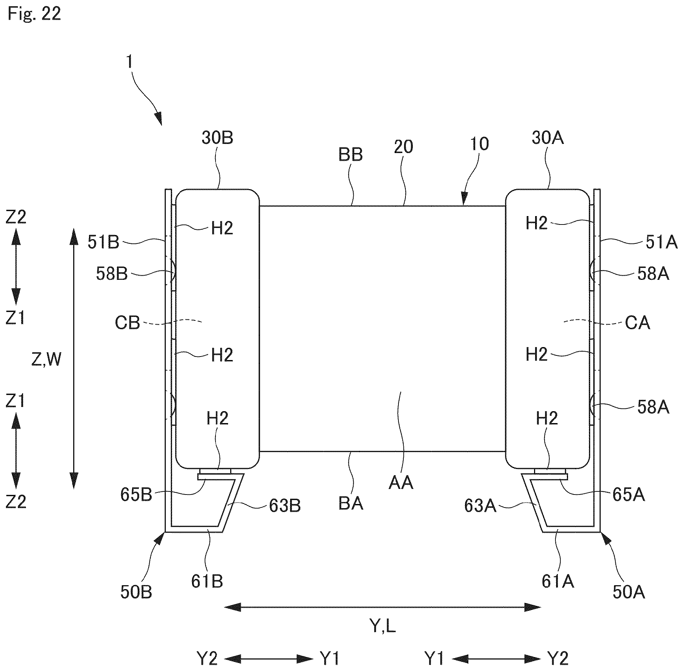

In the above embodiments, the first rising portion 63A extends substantially parallel to the first direction X and the third direction Z, but may not extend parallel to the third direction Z when viewed in the first direction X. For example, as shown in FIG. 22, the first rising portion 63A may be sloped with respect to the second direction Y and the third direction Z when viewed in the first direction X. The angle between the surface of the first rising portion 63A on the second direction middle side Y1 and the second direction Y is preferably 70° or more and 90° or less. With such a configuration, it is possible to secure a contact area between the external electrode 30 of the multilayer ceramic capacitor body 10 and the holding portion 65 of the metal terminal 50, to prevent the multilayer ceramic capacitor body 10 from falling off, to secure a distance between the lands 92, and to secure a creepage distance between the lands 92.

The second rising portion 63B extends substantially parallel to the first direction X and the third direction Z, but may not extend parallel to the third direction Z when viewed in the first direction X. The second rising portion 63B may be sloped with respect to the second direction Y and the third direction Z when viewed in the first direction X. The angle formed by the surface of the second rising portion 63B on the second direction middle side Y1 and the second direction Y is preferably 70° or more and 90° or less. Regarding the second metal terminal 50B as well, it is possible to achieve advantageous effects similar to those of the first metal terminal 50A by a configuration corresponding to that of the first metal terminal 50A.

In the above embodiments, the capacitor aggregate G is provided by the plurality of multilayer ceramic capacitor bodies 10 arranged in the lamination direction T, but the capacitor aggregate G may be provided by the plurality of multilayer ceramic capacitor bodies 10 arranged in the width direction W. In other words, the multilayer ceramic capacitor 1 may not be mounted on the mounting substrate in a direction in which the lateral surface B of each multilayer ceramic capacitor body 10 is opposed to the mounting surface, and may be mounted on the mounting substrate in a direction in which the main surface A of each multilayer ceramic capacitor body 10 is opposed to the mounting surface.

In the above embodiments, as the multilayer ceramic electronic component, a multilayer ceramic capacitor in which the dielectric layer 14 made of a dielectric ceramic is used as a ceramic layer has been exemplified. However, the multilayer ceramic electronic component of the present disclosure is not limited thereto. For example, the ceramic electronic component of the present disclosure can be applied to various multilayer ceramic electronic components such as a piezoelectric component using a piezoelectric ceramic as a ceramic layer, a thermistor using a semiconductor ceramic as a ceramic layer, and an inductor using a magnetic ceramic as a ceramic layer. Examples of the piezoelectric ceramic include PZT (lead zirconate titanate) ceramics, examples of the semiconductor ceramic include spinel ceramics, and examples of the magnetic ceramic include ceramics such as ferrite.

The present invention also includes the following combinations.

<1> A multilayer ceramic electronic component to be connected to a land provided on a mounting substrate is provided. The multilayer ceramic electronic component includes: a plurality of multilayer ceramic electronic component bodies each including a multilayer body including an inner layer portion including a plurality of ceramic layers and a plurality of internal electrodes alternately laminated, a pair of outer layer portions that sandwich the inner layer portion in a lamination direction, a first main surface and a second main surface opposed to each other in the lamination direction, a first lateral surface and a second lateral surface opposed to each other in a width direction orthogonal to the lamination direction, and a first end surface and a second end surface opposed to each other in a length direction orthogonal to the lamination direction and the width direction, a first external electrode on the first end surface, and a second external electrode on the second end surface; a first metal terminal connected to the first external electrode; and a second metal terminal connected to the second external electrode. Each of the multilayer ceramic electronic component bodies is oriented so that the length direction of each of the multilayer ceramic electronic component bodies is parallel to each other, and each of the multilayer ceramic electronic component bodies is arranged in a direction orthogonal to the length direction of the multilayer ceramic electronic component bodies. When a direction in which the multilayer ceramic electronic component bodies are arranged is defined as a first direction, a direction parallel to the length direction of each of the multilayer ceramic electronic component bodies among directions orthogonal to the first direction is defined as a second direction, a direction orthogonal to the first direction and the second direction is defined as a third direction, a direction approaching a middle portion of the multilayer body in the second direction is defined as a direction toward a second direction middle side, a direction away from the middle portion of the multilayer body in the second direction is defined as a direction toward a second direction outer side, a direction approaching a middle portion of the multilayer body in the third direction is defined as a direction toward a third direction middle side, and a direction away from the middle portion of the multilayer body in the third direction is defined as a direction toward a third direction outer side, the first metal terminal includes a first bonding portion that is opposed to each of the first end surfaces, is connected to each of the first external electrodes, and extends more in a direction toward the third direction outer side than each of the multilayer ceramic electronic component bodies, a first mounting portion that extends in a direction toward the second direction middle side from an end portion of the first bonding portion in a direction toward the third direction outer side and is connected to the land, a first rising portion that extends in a direction toward the third direction middle side from an end portion of the first mounting portion in a direction toward the second direction middle side, and a first holding portion that extends in a direction toward the second direction outer side from an end portion of the first rising portion in a direction toward the third direction middle side and is opposed to each of the multilayer ceramic electronic component bodies in the third direction, in which the first metal terminal is provided so as to straddle the first external electrode of each of the multilayer ceramic electronic component bodies, and the second metal terminal includes a second bonding portion that is opposed to each of the second end surfaces, is connected to each of the second external electrodes, and extends more in a direction toward the third direction outer side than each of the multilayer ceramic electronic component bodies, a second mounting portion that extends in a direction toward the second direction middle side from an end portion of the second bonding portion in a direction toward the third direction outer side and is connected to the land, a second rising portion that extends in a direction toward the third direction middle side from an end portion of the second mounting portion in a direction toward the second direction middle side, and a second holding portion that extends in a direction toward the second direction outer side from an end portion of the second rising portion in a direction toward the third direction middle side and is opposed to each of the multilayer ceramic electronic component bodies in the third direction, in which the second metal terminal is provided so as to straddle the second external electrode of each of the multilayer ceramic electronic component bodies.
<2> In the multilayer ceramic electronic component as described in <1> above, the first bonding portion includes a plurality of first slit portions extending in the third direction,
   the plurality of first slit portions are provided at positions overlapping in the second direction with portions between adjacent first external electrodes, the second bonding portion includes a plurality of second slit portions extending in the third direction, and the plurality of second slit portions are provided at positions overlapping in the second direction with portions between adjacent second external electrodes.
<3> In the multilayer ceramic electronic component as described in <1> or <2> above, the first bonding portion includes a plurality of first slit portions extending in the third direction, the plurality of first slit portions are provided at positions overlapping the first external electrode in the second direction, the second bonding portion includes a plurality of second slit portions extending in the third direction, and the plurality of second slit portions are provided at positions overlapping the second external electrode in the second direction.
<4> In the multilayer ceramic electronic component as described in <2> or <3> above, a maximum dimension in the first direction between the first slit portions which are adjacent is larger than a minimum dimension in the first direction of the first slit portions, and a maximum dimension in the first direction between the second slit portions which are adjacent is larger than a minimum dimension in the first direction of the second slit portions.
<5> In the multilayer ceramic electronic component as described in any one of <2> to <4> above, a dimension of the first slit portion in the third direction is longer than a half of a dimension of the first external electrode in the third direction and shorter than a dimension of the first external electrode in the third direction, and a dimension of the second slit portion in the third direction is longer than a half of a dimension of the second external electrode in the third direction and shorter than a dimension of the second external electrode in the third direction.
<6> In the multilayer ceramic electronic component as described in any one of <2> to <5> above, a dimension in the first direction of an end portion on a side closer to the first mounting portion among end portions in the third direction of the first slit portion is smaller than a dimension in the first direction of an end portion on a side farther from the first mounting portion among the end portions in the third direction of the first slit portion, and a dimension in the first direction of an end portion on a side closer to the second mounting portion among end portions in the third direction of the second slit portion is smaller than a dimension in the first direction of an end portion on a side farther from the second mounting portion among the end portions in the third direction of the second slit portion.
<7> In the multilayer ceramic electronic component as described in any one of <1> to <6> above, the first bonding portion includes a plurality of first protrusions protruding toward each of the first external electrodes, and the second bonding portion includes a plurality of second protrusions protruding toward each of the second external electrodes.
<8> In the multilayer ceramic electronic component as described in any one of <1> to <7> above, the first bonding portion has a first through-hole portion and a first notch that each penetrate the first bonding portion in the second direction at a position overlapping the first external electrode in the second direction, and the second bonding portion has a second through-hole portion and a second notch that each penetrate the second bonding portion in the second direction at a position overlapping the second external electrode in the second direction.
<9> In the multilayer ceramic electronic component as described in any one of <1> to <8> above, the plurality of internal electrodes include first internal electrodes each extending toward the first end surface, second internal electrodes each extending toward the second end surface, and intermediate electrodes each extending toward neither the first end surface nor the second end surface, the first rising portion is provided more in a direction toward the second direction outer side than an end portion of each of the first internal electrodes in a direction toward the second direction middle side, and the second rising portion is provided more in a direction toward the second direction outer side than an end portion of each of the second internal electrodes in a direction toward the second direction middle side.

### EXPLANATION OF REFERENCE NUMERALS

1, 201, 301, 401 multilayer ceramic capacitor (multilayer ceramic electronic component)
10 multilayer ceramic capacitor body (multilayer ceramic electronic component body)
11 inner layer portion
12 outer layer portion
14 dielectric layer (ceramic layer)
15, 115 internal electrode
15A, 115A first internal electrode
15B, 115B second internal electrode
15C intermediate electrode
20 multilayer body
30A first external electrode
30B second external electrode
50A, 250A, 350A, 450A first metal terminal
50B, 250B, 350B, 450B second metal terminal
51A, 251A, 351A, 451A first bonding portion
51B, 251B, 351B, 451B second bonding portion
52A, 252A first slit portion
52B, 252B second slit portion
58A first protrusion
58B second protrusion
59A first through-hole portion
59B second through-hole portion
61A first mounting portion
61B second mounting portion
63A first rising portion
63B second rising portion
65A first holding portion
65B second holding portion
159A first notch
159B second notch
AA first main surface
AB second main surface
BA first lateral surface
BB second lateral surface
CA first end surface
CB second end surface

## Claims

1. A multilayer ceramic electronic component to be connected to a land provided on a mounting substrate, the multilayer ceramic electronic component comprising:
a plurality of multilayer ceramic electronic component bodies each including a multilayer body including an inner layer portion including a plurality of ceramic layers and a plurality of internal electrodes alternately laminated, a pair of outer layer portions that sandwich the inner layer portion in a lamination direction, a first main surface and a second main surface opposed to each other in the lamination direction, a first lateral surface and a second lateral surface opposed to each other in a width direction orthogonal to the lamination direction, and a first end surface and a second end surface opposed to each other in a length direction orthogonal to the lamination direction and the width direction, a first external electrode on the first end surface, and a second external electrode on the second end surface;
a first metal terminal connected to the first external electrode; and
a second metal terminal connected to the second external electrode,
wherein each of the multilayer ceramic electronic component bodies is oriented so that the length direction of each of the multilayer ceramic electronic component bodies is parallel to each other, and each of the multilayer ceramic electronic component bodies is arranged in a direction orthogonal to the length direction of the multilayer ceramic electronic component bodies,
when a direction in which the multilayer ceramic electronic component bodies are arranged is defined as a first direction, a direction parallel to the length direction of each of the multilayer ceramic electronic component bodies among directions orthogonal to the first direction is defined as a second direction, a direction orthogonal to the first direction and the second direction is defined as a third direction, a direction approaching a middle portion of the multilayer body in the second direction is defined as a direction toward a second direction middle side, a direction away from the middle portion of the multilayer body in the second direction is defined as a direction toward a second direction outer side, a direction approaching a middle portion of the multilayer body in the third direction is defined as a direction toward a third direction middle side, and a direction away from the middle portion of the multilayer body in the third direction is defined as a direction toward a third direction outer side,
the first metal terminal includes a first bonding portion that is opposed to each of the first end surfaces, is connected to each of the first external electrodes, and extends more in a direction toward the third direction outer side than each of the multilayer ceramic electronic component bodies, a first mounting portion that extends in a direction toward the second direction middle side from an end portion of the first bonding portion in a direction toward the third direction outer side and is connected to the land, a first rising portion that extends in a direction toward the third direction middle side from an end portion of the first mounting portion in a direction toward the second direction middle side, and a first holding portion that extends in a direction toward the second direction outer side from an end portion of the first rising portion in a direction toward the third direction middle side and is opposed to each of the multilayer ceramic electronic component bodies in the third direction, wherein the first metal terminal is provided so as to straddle the first external electrode of each of the multilayer ceramic electronic component bodies, and
the second metal terminal includes a second bonding portion that is opposed to each of the second end surfaces, is connected to each of the second external electrodes, and extends more in a direction toward the third direction outer side than each of the multilayer ceramic electronic component bodies, a second mounting portion that extends in a direction toward the second direction middle side from an end portion of the second bonding portion in a direction toward the third direction outer side and is connected to the land, a second rising portion that extends in a direction toward the third direction middle side from an end portion of the second mounting portion in a direction toward the second direction middle side, and a second holding portion that extends in a direction toward the second direction outer side from an end portion of the second rising portion in a direction toward the third direction middle side and is opposed to each of the multilayer ceramic electronic component bodies in the third direction, wherein the second metal terminal is provided so as to straddle the second external electrode of each of the multilayer ceramic electronic component bodies.

2. The multilayer ceramic electronic component according to claim 1, wherein
the first bonding portion includes a plurality of first slit portions extending in the third direction,
the plurality of first slit portions are provided at positions overlapping in the second direction with portions between adjacent first external electrodes,
the second bonding portion includes a plurality of second slit portions extending in the third direction, and
the plurality of second slit portions are provided at positions overlapping in the second direction with portions between adjacent second external electrodes.

3. The multilayer ceramic electronic component according to claim 1, wherein
the first bonding portion includes a plurality of first slit portions extending in the third direction,
the plurality of first slit portions are provided at positions overlapping the first external electrode in the second direction,
the second bonding portion includes a plurality of second slit portions extending in the third direction, and
the plurality of second slit portions are provided at positions overlapping the second external electrode in the second direction.

4. The multilayer ceramic electronic component according to claim 2 or 3, wherein a maximum dimension in the first direction between the first slit portions which are adjacent is larger than a minimum dimension in the first direction of the first slit portions, and a maximum dimension in the first direction between the second slit portions which are adjacent is larger than a minimum dimension in the first direction of the second slit portions.

5. The multilayer ceramic electronic component according to claim 2 or 3, wherein
a dimension of the first slit portion in the third direction is longer than a half of a dimension of the first external electrode in the third direction and shorter than a dimension of the first external electrode in the third direction, and
a dimension of the second slit portion in the third direction is longer than a half of a dimension of the second external electrode in the third direction and shorter than a dimension of the second external electrode in the third direction.

6. The multilayer ceramic electronic component according to claim 2 or 3, wherein
a dimension in the first direction of an end portion on a side closer to the first mounting portion among end portions in the third direction of the first slit portion is smaller than a dimension in the first direction of an end portion on a side farther from the first mounting portion among the end portions in the third direction of the first slit portion, and
a dimension in the first direction of an end portion on a side closer to the second mounting portion among end portions in the third direction of the second slit portion is smaller than a dimension in the first direction of an end portion on a side farther from the second mounting portion among the end portions in the third direction of the second slit portion.

7. The multilayer ceramic electronic component according to any one of claims 1 to 3, wherein
the first bonding portion includes a plurality of first protrusions protruding toward each of the first external electrodes, and
the second bonding portion includes a plurality of second protrusions protruding toward each of the second external electrodes.

8. The multilayer ceramic electronic component according to any one of claims 1 to 3, wherein
the first bonding portion has a first through-hole portion and a first notch that each penetrate the first bonding portion in the second direction at a position overlapping the first external electrode in the second direction, and
the second bonding portion has a second through-hole portion and a second notch that each penetrate the second bonding portion in the second direction at a position overlapping the second external electrode in the second direction.

9. The multilayer ceramic electronic component according to any one of claims 1 to 3, wherein
the plurality of internal electrodes include first internal electrodes each extending toward the first end surface, second internal electrodes each extending toward the second end surface, and intermediate electrodes each extending toward neither the first end surface nor the second end surface,
the first rising portion is provided more in a direction toward the second direction outer side than an end portion of each of the first internal electrodes in a direction toward the second direction middle side, and
the second rising portion is provided more in a direction toward the second direction outer side than an end portion of each of the second internal electrodes in a direction toward the second direction middle side.
